# EUROPEAN PATENT SPECIFICATION

(11) **EP 3 998 200 B1**
(45) Date of publication and mention of the grant of the patent: **24.04.2024**
(21) Application number: 21158264.8
(22) Date of filing: 19.02.2021
(51) Int. Cl.: B64C 13/50, B64D 31/14, B64C 9/08, B64C 29/00, B64C 39/12, B64C 15/12, H04L 12/40, G05D 1/08

(54) **FAULT TOLERANT AIRCRAFT FLIGHT CONTROL SYSTEM**
FEHLERTOLERANTES FLUGZEUGFLUGSTEUERUNGSSYSTEM
SYSTÈME DE COMMANDE DE VOL D'AÉRONEF TOLÉRANT AUX PANNES

(43) Date of publication of application: 18.05.2022
(73) Proprietor: Lilium eAircraft GmbH, 82234 Wessling (DE)
(72) Inventor: TELES FERREIRA, João Filipe, 82205 Gilching (DE); RIBAS, Gabriel Oliveira, 82110 Germering (DE)
(74) Representative: Weickmann & Weickmann PartmbB

(56) References cited:
- EP-A1- 3 254 960
- WO-A1-2019/006469
- CN-A- 108 688 803
- US-A1- 2015 029 902
- US-A1- 2019 334 741
- US-A1- 2020 031 454
- ANONYMOUS: "An introduction to the Lilium Jet", INTERNET CITATION, 19 May 2019 (2019-05-19), XP002803786, Retrieved from the Internet: URL:https://lilium.com/newsroom-detail/you ve-never-seen-anything-like-this-an-introd uction-to-the-lilium-jet [retrieved on 2021-07-27]

## Description

### TECHNICAL FIELD

The present invention generally relates to a flight control system for an aircraft, and an aircraft, that may have such a flight control system. In particular, the invention relates to an aircraft to the canard type having multiple lift/thrust units distributed along the front or canard wings and along the aft or main wings.

### BACKGROUND

Aircrafts maybe generally classified into fixed wing and rotating wing types. Fixed wing aircrafts typically include a plurality of flight control surfaces that, when controllably positioned, guide the movement of the aircraft from one destination to another destination. The number and type of flight control surfaces included in an aircraft may vary. Primary flight control surfaces are typically those that are used for control the aircraft movement with respect to the pitch, yaw and roll axes. Secondary flight control surface are typically those that are used to influence the lift or drag (or both) of the aircraft. Typical primary flight control surfaces include elevators, ailerons and rudder, and typical secondary flight control surfaces include a plurality of flaps, slats speed brakes and spoilers.

Rotary-wing aircraft, such as e.g. helicopters, typically do not have flight control surfaces that are separated from the airfoils that produce lift, but the airfoils that constitute the rotating wing have a cyclic control for pitch and roll, and a collective control for lift.

Further, aircrafts are known, which have a vertical take-off and landing capability based on propulsion engines, which are mounted rotatably with respect to a transvers axis or pitch axis of the aircraft. The propulsion engines are controllably movable between a cruising flight position and a take-off/landing position. In the cruising position the engines provide forward thrust and the movement of the aircraft through the air is controlled by means of suitable flight control surfaces. In the take-off/landing position, the propulsion engines are angled downwards for allowing a vertical take-off or landing based on the thrust provided by the engines.

Such types of aircraft with vertical take-off and landing capability and having electrically driven ducted propellers as propulsion engines have been proposed by the present applicant Lilium GmbH according to the publications US 2016/0023754 A1 and US 2016/0311522 A1 and further publications of the same patent families. The present applicant meanwhile has developed an aircraft denoted as Lilium jet, which is a canard type aircraft and has plural left front engines, plural right front engines, plural left aft engines and plural right aft engines in the form of ducted propellers operated electrically, which are mounted to respective flaps of the front left and right canard wing and the left and right aft or main wing of the canard type aircraft. The first test flight of this Lilium jet was performed on October 01, 2019.

For any such kind of aircrafts and any other type of aircraft, resilience against technical failures is one of the most important aspects. The flight control system is a critical system, for which redundancy must be provided, also in view of regulatory requirements, which have to be met.

According to a conventional approach, typically a well-known (traditional) triplex architecture having three independent flight control computers and three independent networks is used.

However, traditional triplex architectures generally have a substantial weight, because of a higher number of busses, connectors and the necessary physical path segregation.

State of the art technology solutions for bus communication generally have the following disadvantages: rather slow communication (e.g. ARINC-429), need for a critical bus controller or router (e.g. MIL-STD-1553, AFDX), high costs (e.g. MIL-STD-1554, AFDX), proprietary single supplier (monopoly and therewith resulting high costs and unwanted dependency from a single source) or use of complex technology (e.g. TTE, TTP, ...), are rather heavy because of many wires (e.g. RS-422 full duplex) and have limitations in the network configuration, e.g. not allowing N-to-N communication.

Based on conventional approaches, the use of other communication busses and in particular the use of CAN bus architecture for fly-by-wire flight control systems is limited to unmanned operations.

A known conventional flight control system for an aircraft, in general terms, comprises a flight computer system, which is connected via an electronic or optoelectronic bus system with a plurality of bus nodes, which each are configured to at least one of controlling an associated aircraft device based on command messages received from the flight control computer system via the bus system and sending information messages to the flight control computer system via the bus system.

Flight control systems on which the preamble part of claim 1 may be read are known e.g. from US 2020/0031454 A1 and US 2019/0334741 A1. The use of a redundant CAN bus system in an aircraft is also known from US 2015/0029902 A1 and EP 3 254 960 A1.

CN 108688803 A discloses a so-called VTLV aircraft, meaning an aircraft that can vertically take off and vertically land.

In view of the foregoing, it is an object of the present invention, according to a first aspect thereof, to provide such a flight control system for an aircraft, on basis of which a substantial resiliency against technical failures can be achieved in an efficient manner.

According to a second aspect, the invention shall provide an aircraft having such a flight control system, which is configured to achieve such a resiliency.

### SUMMARY OF THE INVENTION

For achieving the firstly mentioned object, the invention, according to the first aspect, provides a flight control system for an aircraft as is defined in claim 1. The flight control system comprises a flight control computer system, which is connected via an electronic or optoelectronic bus system with a plurality of bus nodes, which each are configured to at least one of controlling an associated aircraft device based on command messages received from the flight control computer system via the bus system and sending information messages to the flight control computer system via the bus system.

The electronic or optoelectronic bus system is a redundant electronic or optoelectronic bus system comprising plural independent bus sub-systems, wherein each bus node is configured to communicate with the flight control computer system via two different bus sub-systems of the plural independent bus sub-systems, wherein each bus node further is configured to communicate with the flight control computer system on basis of an associated predetermined bus communication protocol via a first bus sub-system of the respective two different bus sub-systems and on basis of an associated predetermined bus communication protocol via a second bus sub-system of the respective two different bus sub-systems.

The provision of two different bus sub-systems is the basis for achieving integrity, availability and dissimilarity, as is appropriate for a critical system like the flight control system. Therewith tolerance to failures in the bus communication can be achieved with minimal impact in the flight mission.

According to a favorable approach, different bus communication protocols may be used. In this respect, it is proposed that each bus node of a first group of the bus nodes is configured to communicate with the flight control computer system via the first bus sub-system on basis of a first bus communication protocol, which is the associated predetermined bus communication protocol of the bus nodes of the first group for the first bus sub-system, and is configured to communicate with the flight control computer system via the second bus sub-system on basis of a second bus communication protocol, which is the associated predetermined bus communication protocol of the bus nodes of the first group for the second bus sub-system and differs from the first bus communication protocol.

Further, it is proposed that each bus node of a second group of the bus nodes is configured to communicate with the flight control computer system via the first bus sub-system on basis of the second bus communication protocol, which is the associated predetermined bus communication protocol of the bus nodes of the second group for the first bus sub-system, and is configured to communicate with the flight control computer system via the second bus sub-system on basis of the first bus communication protocol, which is the associated predetermined bus communication protocol of the bus nodes of the second group for the second bus sub-system.

Therewith favorable dissimilarity is achieved also with respect to the bus communication protocols, resulting in a particular good resiliency against failures.

According to the invention, each of the plural independent bus sub-systems is composed of plural independent communication busses. Each bus node is connected via one associated communication bus of the first bus sub-system with the flight control computer system and is configured to communicate via this communication bus of the first bus sub-system with the flight control computer system on basis of the associated predetermined bus communication protocol and each bus node is connected via one associated communication bus of the second bus sub-system with the flight control computer system and is configured to communicate via this communication bus of the second bus sub-system with the flight control computer system on basis of the associated predetermined bus communication protocol.

The provision of plural independent communication busses within each bus sub-system allows achieving a high degree of redundancy and therewith good resiliency against failures, in particular if the various aircraft devices and their bus nodes are associated to the independent communication busses in an intelligent manner. In this context, the invention provides that plural bus nodes are associated to each of a plurality or most or all of the plural independent communication busses of the first bus sub-system, wherein the bus nodes being associated to the same independent communication bus of the first bus sub-system are configured to communicate via this common independent communication bus with the flight control computer system, and that plural bus nodes are associated to each of a plurality or most or all of the plural independent communication busses of the second bus sub-system, wherein the bus nodes being associated to the same independent communication bus of the second bus sub-system are configured to communicate via this common independent communication bus with the flight control computer system.

Particularly preferred embodiments of the flight control system of the invention are based on a CAN bus system. To this end, it is proposed that the bus nodes are CAN bus nodes, the plurality independent bus sub-systems are realized as independent CAN bus sub-systems, and the predetermined bus communication protocols each are one of plural different CAN bus protocols according to a respective CAN standard, including a first CAN bus protocol according to a first CAN standard and a second CAN bus protocol according to a second CAN standard differing from the first CAN standard.

In this case, each of the independent CAN bus sub-systems will be composed of plural independent CAN busses realizing the plural independent communication busses, so that each CAN bus node is connected via one associated CAN bus of a first CAN bus sub-system with the flight control computer system and each bus node is connected via one associated CAN bus of a second bus CAN sub-system with the flight control computer system.

Further, in this case, each of plural or most or all of the CAN busses of the first CAN bus sub-system will be connected with plural associated of the CAN bus nodes and each of plural or most or all of the CAN busses of the second CAN bus sub-system is connected with plural associated of the CAN bus nodes, wherein the CAN bus nodes being connected with the same CAN bus are configured to communicate via this common CAN bus with the flight control computer system.

According to the already mentioned favorable approach to use plural bus communication protocols, each CAN bus node of a/the first group of the bus nodes is configured to communicate with the flight control computer system via the associated CAN bus of the first CAN bus sub-system on basis of the first CAN bus protocol, and is configured to communicate with the flight control computer system via the associated CAN bus of the second CAN bus sub-system on basis of the second CAN bus protocol, and each CAN bus node of a/the second group of the bus nodes is configured to communicate with the flight control computer system via the associated CAN bus of the first CAN bus sub-system on basis of the second CAN bus protocol, and is configured to communicate with the flight control computer system via the second CAN bus sub-system on basis of the first CAN bus protocol.

To advantage, one of the first and second CAN bus protocols may follow one of the ISO 11898 standard referred to as CAN STANDARD and the SAE J2284-5:2016 standard referred to as CAN FD.

Further, it is proposed that the other of the first and second CAN bus protocols follows the other of the ISO 11898 standard referred to as CAN STANDARD and the SAE J2284-5:2016 standard referred to as CAN FD.

Both protocols are conventionally known and have favorable characteristics. Typically a high speed CAN according to ISO 11898-2 (CAN STANDARD) allows up to 1 Mbit/s bus communications. High speed CAN according to SAE J2284-5:2016 (CAN FD) typically allows up to 5Mbit/s. Therewith bus communication according to the CAN FD standard may to advantage be used also for other bus communications than the usual transmission of command messages and information messages for controlling the aircraft. For example, firmware or software updates of various bus nodes and other components connected to the bus system could be done in a very efficient manner by using the CAN FD standard.

According to the invention, the flight control computer system is a redundant flight control computer system that comprises plural independent flight control computers. According to the invention, three independent flight control computers are provided. The plural independent flight control computers may be dissimilar flight control computers differing in at least one of the flight control computer hardware and the flight control computer software, preferably differing in both thereof.

Each flight control computer will be connected via one of the independent bus sub-systems or independent CAN bus sub-systems with each of the bus nodes or CAN bus nodes. According to the invention, two of the flight control computers are connected via the first bus sub-system or first CAN bus sub-system with each of the bus nodes or CAN bus nodes and the other of the flight control computers is connected via the second bus sub-system or second CAN bus sub-system with each of the bus nodes or CAN bus nodes. This substantially contributes to the desired resiliency against failures.

In this respect, it is further proposed that at least one of the flight control computers is configured to communicate with the bus nodes or CAN bus nodes of a/the first group on basis of the first bus communication protocol or first CAN bus protocol and with the bus nodes or CAN bus nodes of a/the second group on basis of the second bus communication protocol or second first CAN bus protocol, and that at least one other of the flight control computers is configured to communicate with the bus nodes or CAN bus nodes of the first group on basis of the second bus communication protocol or second CAN bus protocol and with the bus nodes or CAN bus nodes of the second group on basis of the first bus communication protocol or first CAN bus protocol.

Accordingly, the invention provides for three flight control computers, wherein a first flight control computer and a second flight control computer are connected via the first bus sub-system or first CAN bus sub-system with each of the bus nodes or CAN bus nodes, and a third flight control computer is connected via the second bus sub-system or second CAN bus sub-system with each of the bus nodes or CAN bus nodes.

With reference to the mentioned bus communication protocols and CAN bus protocols, it is proposed further that the first flight control computer and the second flight control computer are configured to communicate with the bus nodes or CAN bus nodes of the first group on basis of the first bus communication protocol or first CAN bus protocol and are configured to communicate with the bus nodes or CAN bus nodes of the second group on basis of the second bus communication protocol or second CAN bus protocol, and that the third flight control computer is configured to communicate with the bus nodes or CAN bus nodes of the first group on basis of the second bus communication protocol or second CAN bus protocol and is configured to communicate with the bus nodes or CAN bus nodes of the second group on basis of the first bus communication protocol or first CAN bus protocol.

Based on the three flight control computers being provided, a kind of majority voting or negotiating between the flight control computers may be realized. In this respect, it is further proposed that the flight control computers are configured to elect one of the flight control computers to be the flight control computer in control and therewith to elect the other two flight control computers to be a supervising flight control computer. Each flight control computer may be configured to operate as flight control computer in control and to control the aircraft based on command messages sent to bus nodes or CAN bus nodes via the respective independent bus sub-system or independent CAN bus sub-system and possibly based on information messages received from bus nodes or CAN bus nodes via the respective independent bus sub-system or independent CAN bus sub-system. At least two, preferably all three flight control computers may be configured to operate as a supervising flight control computer and to monitor at least one of the operation of the flight control computer currently being the flight control computer in control and messages sent via the respective independent bus sub-system or independent CAN bus sub-system.

To advantage, the flight control computers or at least the flight control computers configured to be a supervising flight control computer may be configured to elect a different flight control computer than the flight control computer currently operating as flight control computer in control as new flight control computer in control, based on the monitoring done by the flight control computers operating as supervising flight control computers. According to the second aspect of the invention, an aircraft comprising a flight control system according to the invention as described in the foregoing is provided. The aircraft may be at least one of a single pilot aircraft, an aircraft having a vertical take-off and landing capability and an aircraft of the canard type, for example. A particular preferred embodiment is an aircraft of the canard type having a vertical take-off and landing capability. However, the flight control system of the invention can favorably be implemented in any other kind of aircrafts, including all types of aircrafts mentioned in the foregoing description of the technical background.

The aircraft may have plural aircraft devices of a common type, which each have associated a respective bus node or CAN bus node of the flight control system. In this respect, it is proposed that the aircraft devices are arranged in a number and configuration at one or both of the fuselage of the aircraft and wings of the aircraft to achieve a resiliency against failures, such that various subgroups of the plural aircraft devices each comprising at least two of the aircraft devices of the common type may fail without endangering the flight capability and the controllability of the aircraft.

Concerning the mentioned realization of the flight control system having independent communication busses or CAN busses, it is proposed that the bus nodes or CAN bus nodes of the aircraft devices of the common type are associated in such a number and manner to a respective independent communication bus or CAN bus of the first bus sub-system or first CAN bus sub-system and are associated in such a number and manner to a respective independent communication bus or CAN bus of the second bus sub-system or second CAN bus sub-system, that any combination of two independent communication buses or CAN busses of the flight control system may fail without substantially compromising the flight capability and the controllability of the aircraft.

The aircraft devices of the common type or of a first common type may be flaps, which have air control surfaces. The flaps may be mounted in a moveable, e.g. pivotable manner to wings of the aircraft, and each flap may have associated at least one flap actuator and a bus node or CAN bus node, which is configured to control a deflection angle of the flap by controlling the at least one flap actuator based on command messages received from the flight control computer system.

The aircraft devices of the common type or of a second common type may be propulsion engines. Each propulsion engine has associated a bus node or CAN bus node, which is configured to control the operation of the propulsion engine based on command messages received from the flight control computer system.

According to a particular preferred embodiment, flaps as well as propulsion engines are provided, which are associated to each other. In this respect, it is proposed that the propulsion engines are mounted to or integrated with an associated one of the flaps, so that a thrust direction of the propulsion engines can be controlled by controlling the deflection angle of the respective flap by means of the respective at least one flap actuator and the respective bus node or CAN bus node associated thereto.

According to one approach, plural or all flaps which serve to control a thrust direction each have associated only one of the propulsion engines, which is mounted to or integrated with the respective flap.

According to another approach, plural or all flaps which serve to control a thrust direction each have associated plural of the propulsion engines, which are mounted to or integrated with the respective flap. In this respect, it is further proposed that a propulsion module comprising plural propulsion engines is mounted to or integrated with the respective flap.

According to a favorable realization, flap actuators and propulsion engines associated thereto have associated common bus nodes or CAN bus nodes. In this respect, it proposed that for each flap having associated one propulsion engine or plural propulsion engines the at least one flap actuator of the flap and the associated propulsion engine or plural propulsion engines have associated a common bus node or CAN bus node, which is configured to control the propulsion engine or propulsion engines and the at least one flap actuator based on command messages received from the flight control computer system.

Under the first and second aspects of the invention, a flight control system architecture with triple dissimilar flight control computers and an aircraft having a flight control system according to this architecture are provided. Each flight control computer, FCC, may be implemented by a different CPU and may communicate with each other FCC via a dedicated bus. During operation, one FCC is elected to effectively control the aircraft (referred as "FCC In Control"), based on its I/O capability, while the others monitor the operation and the messages propagated by the "FCC In Control" via the dedicated bus. If the monitoring FCCs agree that the "FCC In Control" is misbehaving, one of them will be elected the "new FCC In Control" and this decision will be propagated to the other systems of the flight control system.

The FCCs may be connected to the actuators and other aircraft devices of the aircraft via a Dual Fly-By-Wire distribution of the CAN type referred to as CAN A and CAN B. FCC1 and FCC2 may be connected to CAN A and FCC3 may be connected to CAN B. Each CAN network A/B may be composed by plural independent full-duplex CAN buses which connect the FCCs to all flap actuators of plural flaps and all propulsion engines of the aircraft. The flap actuators preferably are realized as electro-mechanical actuators, and the propulsion engines preferably are realized as electrically driven propulsion engines. The propulsion engines favorably may be integrated into lift/thrust units comprising one electrically driven propulsion engine or plural electrically driven propulsion engines, a flap and the respective at least one electromechanical flap actuator. The plural independent full-duplex CAN buses provide direct control to all lift/thrust units for each individual FCC.

For example, a canard type aircraft of the invention may have thirty six (36) lift/thrust units, preferably six (6) lift/thrust units per canard wing and twelve (12) per main wing. Each lift/thrust units comprises one flap and one propulsion engine mounted to or integrated with the flap. The lift/thrust units may be connected via six (6) independent full-duplex CAN buses of CAN network A and via six (6) independent full-duplex CAN buses of CAN network B with the FCCs. Each network provides enough throughput for high update rate commands (up to 200Hz) and is still compliant with ARINC-825 throughput limitation of 50% bus utilization.

Each lift/thrust unit may have two interfaces, one connected to CAN A and the other connected to CAN B. Each interface of the two interfaces may implement a different type of CAN protocol: e.g. one following the ISO 11898 referred as CAN STANDARD and the other the SAE J2284-5:2016 referred as CAN FD, providing a level of dissimilarity on the lift/thrust unit side.

Favorably, the connection between each lift/thrust unit and the individual CAN bus in each network may be arranged in such a manner, that full fault tolerance to single failures is obtained and impact of dual bus failures is minimized. In a particularly preferred arrangement, dual CAN failure will cause, in the worst case, loss of two lift/thrust units: one in the canard and one in the opposite side wing; or two lift/thrust unit in the same wing close to the fuselage. In both cases, there would only be a rather low impact on the lateral balancing of the aircraft, which can easily be handled by the pilot, if needed. According to a preferred embodiment, the unbalancing caused by the failure is handled by the flight control system itself, redistributing part of the command that was supposed to be performed by the failed units to the remaining healthy units. In this case, no pilot action is needed to compensate the unbalancing.

Some advantages of the flight control system architecture of the invention are the following:
- The flight control system architecture allows the FCCs to communicate with a high number of lift/thrust units (for example 36 lift/thrust units with individual flap and engine commands) in a redundant scheme.
- The flight control system architecture allows to provide commands at a high update rate (e.g. at least 200Hz).
- The flight control system architecture provides integrity, availability and dissimilarity as needed for a critical system.
- The flight control system architecture is tolerant to a variety of failures with minimal impact in the flight mission.
- The flight control system architecture facilitates maintenance activities.

According to the invention, advantages of a triplex architecture on the flight control computer side, providing a system tolerant to any single FCC failure, may favorably be combined with the advantages of a dual CAN network, providing a lighter and simpler solution than a conventional triple network architecture, but keeping the required availability and dissimilarity requirements.

Of particular technical value are the following advantages and achievements enabled by the invention according to its first and second aspects:
- Enough throughput for individual 200 Hz command.
- Less weight than a full triplex architecture.
- Dual segregated physical path.
- Single failure tolerant.
- Complete robustness to a loss of up to two FCCs.
- Complete robustness to a loss of a complete CAN network.
- Complete robustness to a single erroneous FCC.
- Complete robustness to several dual bus failures.
- Mitigation of certain multiple bus failures: A small set of dual bus failure will cause a maximum of two actuator losses, wherein the impact over aircraft controllability margins is minimized if the actuator losses are well distributed, as suggested under the first and second aspects of the invention.
- Reduction of development efforts concerning the flight control system for an aircraft.

### BRIEF DESCRIPTION OF THE DRAWINGS

- Fig. 1: shows schematically a flight control system of an aircraft having a user interface for the pilot, a redundant flight control computer system and an electronic or optoelectronic bus system connecting plural bus nodes with the flight control computer system.
- Fig. 2: is schematic top down view on a canard type aircraft of a first variant, which may be realized as single pilot aircraft having VTOL capability and may be provided with the flight control system according to the present invention.
- Fig. 3: is schematic top down view on a canard type aircraft of a second variant, which may be realized as single pilot aircraft having VTOL capability and may be provided with the flight control system according to the present invention.
- Fig. 4: shows schematically in sub-figure 4a) and sub-figure 4b) two types of lift/thrust units, having three propulsion engines mounted to or integrated with a flap, as shown in Fig. 4a) or having one propulsion engine mounted to or integrated with a flap, as shown in Fig. 4b).
- Fig. 5: shows in sub-figures 5a), 5b), 5c) and 5d) the lift/thrust units of Fig. 4 in side views together with a respective aircraft wing, in four different deflection angles of the flap with respect to the wing.
- Fig. 6: illustrates in sub-figures 6a) and 6b) the control of a flap actuator or flap actuator arrangement and the propulsion engine or propulsion engines of the respective lift/thrust unit via a common control node or bus node.
- Fig. 7: shows schematically an implementation of the flight control system according to Fig. 1 with a redundant electronic or optoelectronic bus system, in agreement with a first aspect of the present invention.
- Fig. 8: shows an example, how the flight control system of Fig. 7 could be implemented in detail for the canard type aircraft of Fig. 3.
- Fig. 9: shows the detailed implementation according to Fig. 8 in a different manner, showing also the positional relation between the various lift/thrust units with respect to each other and along the respective main wing or canard wing of the aircraft.

### DETAILED DESCRIPTION

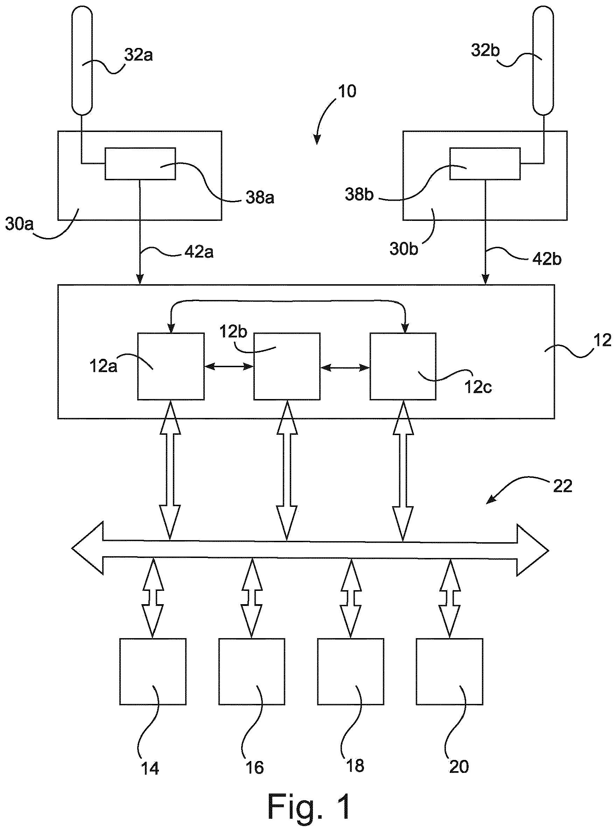

Fig. 1 shows and illustrates schematically an example of a known flight control system 10. The flight control system has a flight control computer system 12, which may be realized according to conventional concepts, in particular concepts, which provide for redundancy. An example is an as such conventional triplex architecture having three redundant flight control computers 12a, 12b and 12c, which may be connected redundantly with the pilot user interface on the one hand and elements and devices of the aircraft to be controlled based on the pilot's commands on the other hand. As examples for conventional redundancy concepts, it may be referred to US 7,337,044 B2, US 8,935,015 B2 and US 8,818,575 B2.

In Fig. 1, various components of the aircraft are represented schematically by elements 14 to 20, which may represent various aircraft devices, such as sensors, actuators (such as actuators for controllably moving flight control surfaces such as flaps and the like), propulsion engines and the like. More precisely, the elements 14 to 20 represent the control nodes or bus nodes of these aircraft devices, which control the respective actuator, propulsion engine and the like bases on commands received from the flight control computer system or/and send sensor or status data to the flight control computer system. According to a preferred embodiment of the invention, a bus system, preferably a CAN bus system 22, is provided for optically or electrically linking the various components with the flight control computer system 12.

The flight control system 10 further comprises a pilot user interface, which may include a left sidestick apparatus 30a and a right sidestick apparatus 30b, the left sidestick apparatus having a left sidestick 32a and the right sidestick apparatus having a right sidestick 32b. Both sidesticks can be pivoted in a left-right direction, about a first maneuvering axis extending at least roughly in a longitudinal direction of the aircraft and in a forwardbackward direction, about a second maneuvering axis extending at least roughly in a traverse direction of the aircraft, preferably orthogonal to the first maneuvering axis.

Corresponding multiple degree of freedom assemblies and sensor assemblies 38a, 38b sensitive to the pivoting movements of the sidesticks or/and pivoting forces acting via the sidesticks as conventionally known may be provided for the two sidesticks.

Electronic flight control signals or electronic flight control commands generated by the sensor assembly 38a and sensor assembly 38b are transmitted via electronic or optical connection links 42a and 42b to the flight control computer system 12.

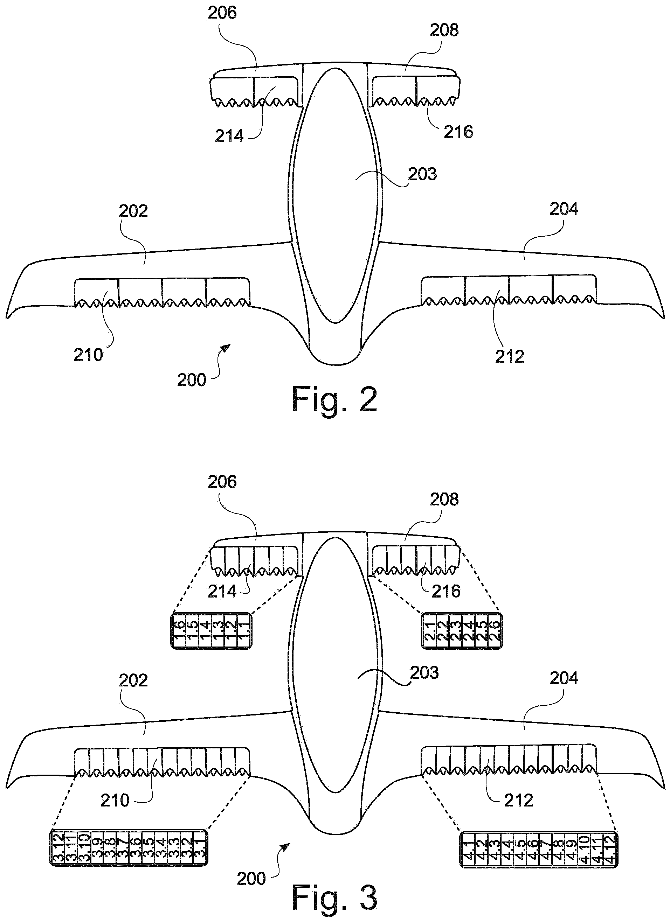

Figs. 2 and 3 illustrate two canard-type aircrafts as non-limiting examples, to which the present invention may be applied. The canard-type aircraft 200 has a fixed left aft or main wing 202 and a fixed right aft or main wing 204 at an aft portion of the fuselage 203 of aircraft and a fixed left front or canard wing 206 and a fixed right front or canard wing 208 at a front portion of the fuselage of the aircraft. Each wing is provided with an array of plural flaps 210, 212, 214 and 216, respectively. For example, at least six flaps per front wing or canard and at least twelve flaps per aft wing or main wing could be provided.

The shown embodiment of Fig. 2 has two flaps per front wing or canard and four flaps per aft wing or main wing, and the shown embodiment of Fig. 3 has six flaps per front wing or canard and twelve flaps per aft wing or main wing.

These flaps are mounted pivotably or moveably to the respective wing and can be pivoted about a pivoting axis or moved with a pivoting movement component by a respective electric actuator arrangement, preferably independently of each other for each flap. Each flap can be pivoted between an upper first operational position and a lower second operational position. Each flap may assume a position of minimum or vanishing inclination with respect to a longitudinal axis of the aircraft, possibly the upper first operational position, and a position of maximum downward inclination with respect to the longitudinal axis of the aircraft, possibly the lower second operational position. However, if the position of maximum downward inclination corresponds to a vertical orientation of the flap, the lower second operational position may alternatively be a position beyond the position of maximum downward inclination, so that the flap points slightly forward.

To each of these flaps at least one propulsion engine in the form of a ducted propeller, which is operated electrically, is mounted. The ducted propellers preferably are mounted to an upper surface of the respective flap. Alternatively, the propulsion engines may be integrated into a respective flap in a manner, that an air channel of the respective propulsion engine, in which the respective ducted propeller rotates, is located above and aligned with an upper surface of the respective front wing or aft wing.

Preferably, the flaps may assume a position corresponding to the lower second operational position or another operational position between the first and the second operational positions, in which the ducted propellers provide only vertical thrust downwardly, which provides the aircraft with a vertical take-off and landing (VTOL) capability. In the upper first operational position or another operational position between the first and the second operational positions, in which the flaps extend in the longitudinal direction or at a minimum angle with respect to the longitudinal direction of the aircraft, the operating ducted propellers provide maximum forward thrust for the aircraft. The flaps operate not only for controlling the thrust direction of the propulsion engines or propulsion modules, but also as flight control surfaces influencing the movement of the aircraft in the air based on the usual aerodynamic principles.

In the shown embodiment of Fig. 2, the flaps are provided with propulsion modules, into which plural propulsion engine in the form of a ducted propeller are integrated. For example, such a propulsion module may include three such propulsion engines, so that each flap is provided with three propulsion engines in the form of a respective ducted propeller. In this case, the aircraft is provided with overall thirty-six propulsion engines.

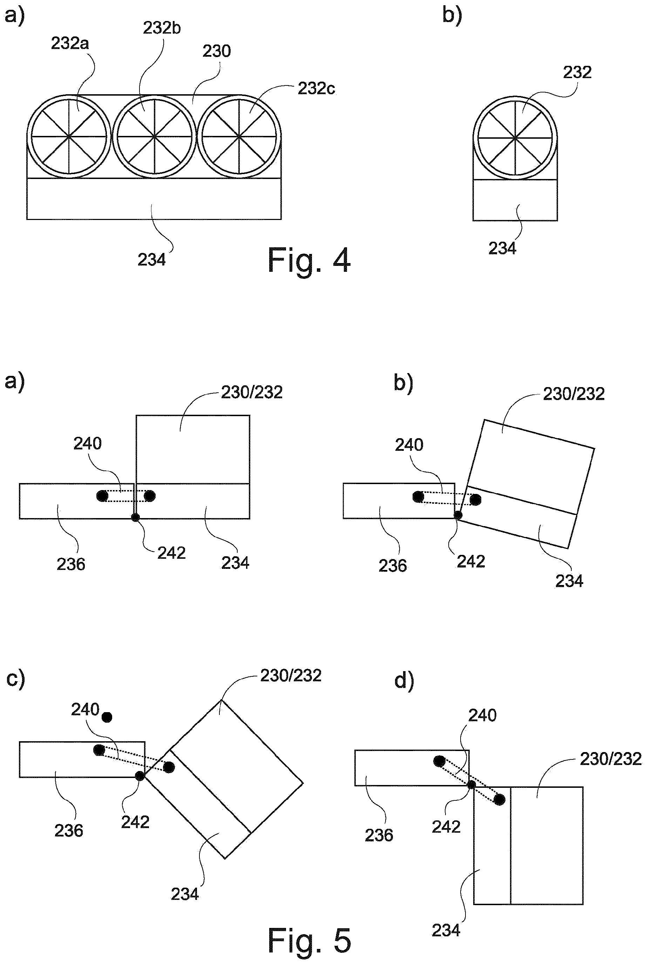

Fig. 4a) shows a schematic view on such a propulsion module 230 having an array of three propulsion engines 232a, 232b and 232c and being mounted to a flap 234, which may be anyone of the flaps 210, 212, 214 and 216 shown in Fig. 2.

In the shown embodiment of Fig. 3, the flaps each are provided with one respective propulsion engine in the form of a ducted propeller. Accordingly, the aircraft is provided with overall thirty-six propulsion engines.

Fig. 4b) shows schematically such a flap 234 with the propulsion engine 232 mounted thereto. The flap 234 may be anyone of the flap 210, 212, 214 and 216 of the Fig. 3.

Fig. 4 shows the respective flap 234 with the propulsion modules 230 or the propulsion engine 232 schematically in a view from the rear of the aircraft.

Fig. 5 shows schematically side views of the respective wing 236 of the aircraft, which may be anyone of the wings 202, 204, 206 and 208 of Fig. 2 and 3, and the respective flap 234, to which the respective propulsion module 230 or the respective propulsion engine 232 is mounted, for different deflection angles of the flap with respect to the wing. For example, a minimum or zero deflection angle as illustrated in Fig. 5a) provides for maximum forward thrust for the aircraft, and a maximum deflection angle or deflection angle of 90 degrees as illustrated in Fig. 5d) provides maximum or only vertical thrust downwardly for achieving a vertical take-off and landing (VTOL) capability for the aircraft. The maximum deflection angle may even be greater than 90 degrees, so that thrust in a direction having a downward component and a backward component is provided.

The intermediate deflection angles of the flap as illustrated in Fig. 5b) and 5c) provide thrust in a direction having a downward component and a forward component, as follows from the respective deflection angle. This deflection angle preferably can be varied continuously between the minimum and maximum deflection angles. A suitable flap actuator or flap actuator arrangement acting between the respective wing 236 and the respective flap 234 is schematically represented in Fig. 5 by the element 240. A suitable pivoting joint or pivoting joint arrangement pivotably linking the flap 234 with the wing 236 is schematically represented in Fig. 5 by the element 242.

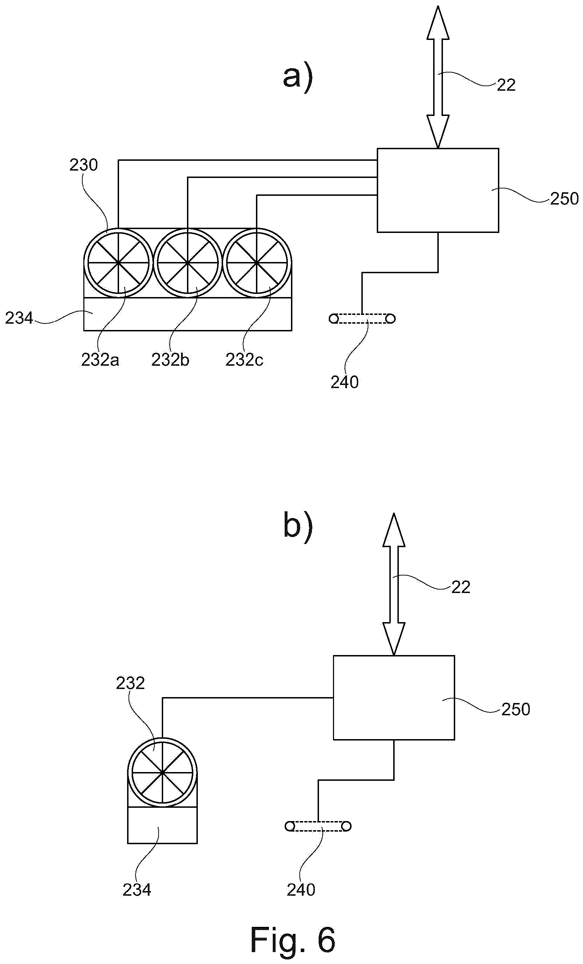

According to preferred embodiments, in case of the approach of Fig. 2, the propulsion engines 232a, 232b and 232c of each propulsion module 230 and the flap actuator or flap actuator arrangements 240 of the respective flap 234 have associated a common bus node 250, which is connected with the bus system, in particular CAN bus system 22 of the flight control system of Fig. 1 and controls the propulsion engines 232a, 232b and 232c and the flap actuator or flap actuator arrangements 240 based on command messages received from the flight control computer system 12 via the bus system or CAN bus system 22. This is illustrated in Fig. 6a).

Analogously, in case of the approach of Fig. 3, the one propulsion engine 232 of each flap 234 and the respective flap actuator or flap actuator arrangement 240 may have associated a common bus node 250, which is connected with the bus system, in particular CAN bus system 22 of the flight control system of Fig. 1 and controls the propulsion engine 232 and the flap actuator or flap actuator arrangement 240 based on command messages received from the flight control computer system 12 via the bus system or CAN bus system 22. This is illustrated in Fig. 6.

In the following, such combinations of one flap 234 with at least one propulsion engine 232 or 232a, 232b and 232c, the flap actuator or flap actuator arrangement 240 and the control node 250, as illustrated in Fig. 4a and 6a together with Fig. 5 on the one hand, and Fig. 4b and Fig. 6b together with Fig. 5 on the other end, are also denoted as lift/thrust units of the aircraft, such as the aircraft of Fig. 2 or the aircraft of Fig. 3, respectively. The bus nodes 250 are bus nodes such as the bus nodes 14, 16, 18 and 20 shown in Fig. 1. In principle, only bus nodes like the bus nodes 250 may be connected with the bus system or CAN bus system 22, but preferably, also other aircraft devices with their corresponding bus nodes may be connected with the bus system. It should further be mentioned that the flaps 234, the propulsion modules 230 and the propulsion engines 232a, 232b, 232c and 232 may have the capability or may be provided with sensors for returning information back to the flight control computer system. To this end, the bus nodes 250 may send corresponding information messages to the flight control computer system via the bus system.

In examples not presently being claimed, the canard-type aircraft 200 may be provided with a flight control system shown schematically in Fig. 1. Based on the control inputs of the pilot by means of the two sidesticks, the flight control computer system 12 controls the deflection angles of the flaps or lift/thrust units at the front wings and the aft wings and the thrust of their propulsion engines by controlling the rotation speeds of the ducted propellers. Preferably, the deflection angles of all flaps or lift/thrust units can be controlled independently of each other. Further, one may provide that the rotation speeds of all ducted propellers can be controlled independently of each other. This applies also to case, that propulsion modules as mentioned, each having plural ducted propellers as in the shown embodiment of Figs. 2, 4a) and 6a), are provided. However, in this case one may decide to provide for a collective control of the rotation speeds of the ducted propellers of each respective propulsion module 230 as more appropriate.

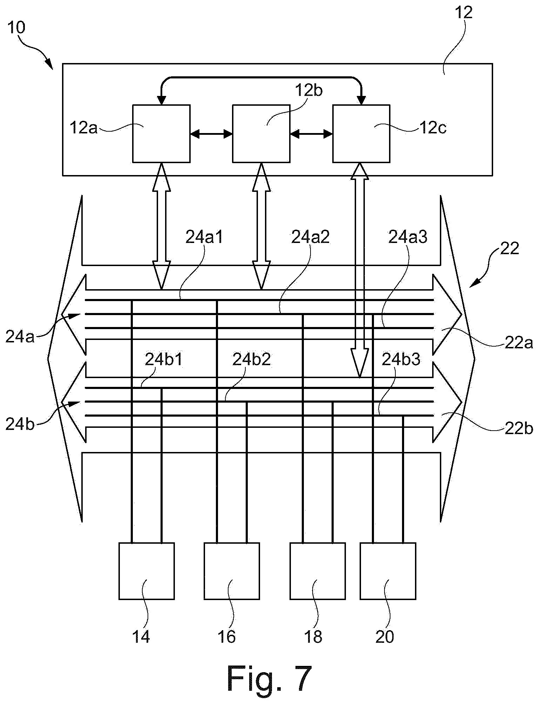

According to the invention, the bus system or CAN bus system 22 comprises a first independent bus sub-system 22a or independent CAN bus sub-system 22a and a second independent bus sub-system 22b or second independent CAN bus sub-system 22b, as illustrated in Fig. 7. The first flight control computer 12a and the second flight control computer 12b are connected with the first bus sub-system or first CAN bus sub-system 22a and the third flight control computer 12c is connected with the second bus sub-system or second CAN bus sub-system 22b. Each of the two independent bus sub-systems or independent CAN bus sub-systems 22a and 22b comprises plural independent communication busses, in particular plural independent CAN busses. Provided are plural independent communication busses 24a or CAN busses 24a in case of the first independent bus sub-system or CAN bus sub-system 22a and plural independent communication busses or CAN busses 24b in case of the second independent bus sub-system or CAN bus sub-system 22b. These independent communication busses or CAN busses, which have full-duplex capability, are represented in Fig. 7 by three parallel horizontal lines 24a1, 24a2, 24a3 and 24b1, 24b2, 24b3, respectively.

The bus nodes 14, 16, 18 and 20, possibly each representing one of plural bus nodes 250 belonging to a respective flap and propulsion engine combination as illustrated in Fig. 6a) and Fig. 6b), each are connected with one of the independent communication busses or CAN busses 24a1, 24a2 and 24a3 of the first bus sub-system 22a and with one of the communication busses or CAN busses 24b1, 24b2 and 24b3 of the second bus sub-system 22b.

As illustrated in Fig. 7, the bus nodes are connected to different communication bus or CAN bus combinations, namely the bus node 14 to the communication or CAN busses 24a1 and 24b1, the bus node 16 to the communication busses or CAN busses 24a1 and 24b2, the bus node 18 to the communication busses or CAN busses 24a2 and 24b2, and the bus node 20 to the communication busses or CAN busses 24a2 and 24b3. This achieves that any pair of the communication busses or CAN busses 24a1, 24a2, 24a3, 24ba, 24b2 and 24b3 may commonly fail without interrupting the communication of more than one bus node of the bus nodes 14, 16, 18 and 20 with the flight control computer system 12. By appropriately assigning the various bus nodes of the aircraft to the communication busses or CAN busses of the two independent bus sub-systems, the effect of such twofold or multiple bus faults can be mitigated, so that the flight capability and the controllability of the aircraft is not substantially compromised.

For example, only a minor effect on the lateral balancing of the aircraft may result, if two lift/thrust units, e.g. of the aircraft shown in Fig. 3, fail due to a failure of any pair of two independent communication busses or CAN busses. The skilled person will be able to provide a sufficient number of aircraft devices of a common type, in particular lift/thrust units, and to arrange these aircraft devices in a suitable configuration on the aircraft, in particular its wings, and to assign these aircraft devices in a suitable manner to the plural independent communication busses or CAN busses of each of the two independent bus sub-systems 22a and 22b, so that the desired resiliency against such twofold bus failures is achieved. In this context, the skilled person will also select an appropriate number of independent communication busses or CAN busses for each of the two independent bus sub-systems.

Even more resiliency against failures in the bus communications is achieved, if each of the bus nodes 14, 16, 18 and 20, in particular bus nodes like the bus nodes 250, are configured to communicate via one of the independent bus sub-systems 22a and 22b according to a first bus communication protocol and are configured to communicate via the other independent bus sub-system of the bus sub-systems 22a and 22b according to a second bus communication protocol, which differs from the first bus communication protocol. In case of CAN busses, it is preferred that each of the bus nodes is configured to communicate with the flight control computer system 12 on basis of a first CAN bus protocol via one of the two CAN bus sub-systems 22a and 22b and on basis of a second CAN bus protocol different from the first CAN bus protocol via the other of the two CAN bus sub-systems 22a and 22b. Correspondingly, the flight control computer system, more particular its flight control computers, is/are configured to communicate with the bus nodes via the respective CAN bus sub-system based on the two different CAN bus protocols.

Preferably, one of the first and second CAN bus protocols follows one of the ISO 11898 standard referred to as CAN STANDARD and the SAE J2284-5:2016 standard referred to as CAN FD, and the other of the first and second CAN bus protocols follows the other of the ISO 11898 standard referred to as CAN STANDARD and the SAE J2284-5:2016 standard referred to as CAN FD.

Providing a CAN bus system 22 with independent CAN bus sub-systems 22a and 22b and respectively plural independent CAN busses 24a1, 24a2, 24a3 and 24b1, 24b2, 24b3, respectively, is indeed highly preferred in the context of the present invention. The CAN bus system is a mature system providing many advantages. The bus participants or bus node decide based on an object identifier of a respective bus message, whether the bus message is relevant. The bus participants are not individually addressed, in agreement with the so-called "ATM" or "anyone-to-many" principle. The bus access is automatically controlled based on the object identifier by bitwise arbitration. However, the ARINC-825 specification even provides additionally for "peer-to-peer" or "PTP" communications, which could be used for certain functions, if desired. A typical CAN bus requires only two signal lines typically provided as twisted pair, namely CAN-Low and CAN-High. In practice, there is normally also a GND (ground) and a CAN V+ (power) line. If desired, CAN bus data may be sent via optical single mode or multimode fibers, using suitable CAN to fiber optic convertors and the like.

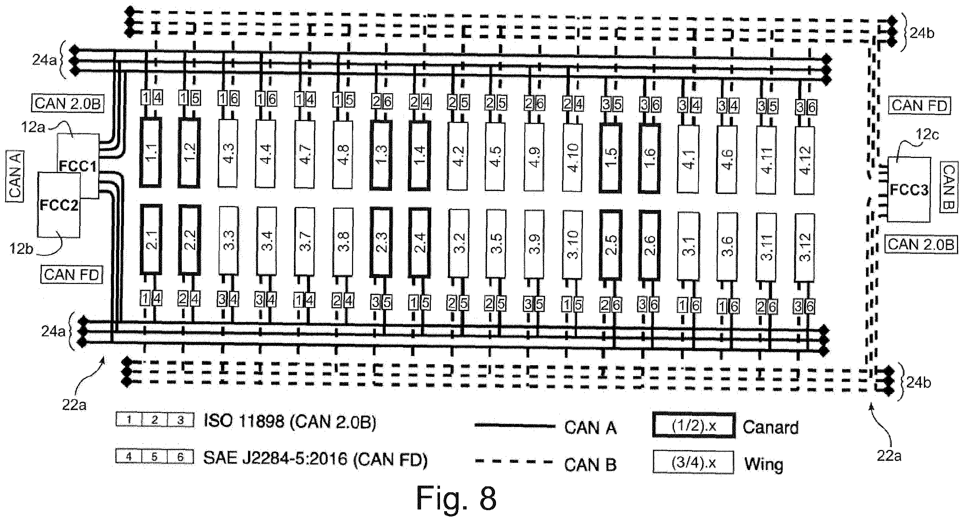

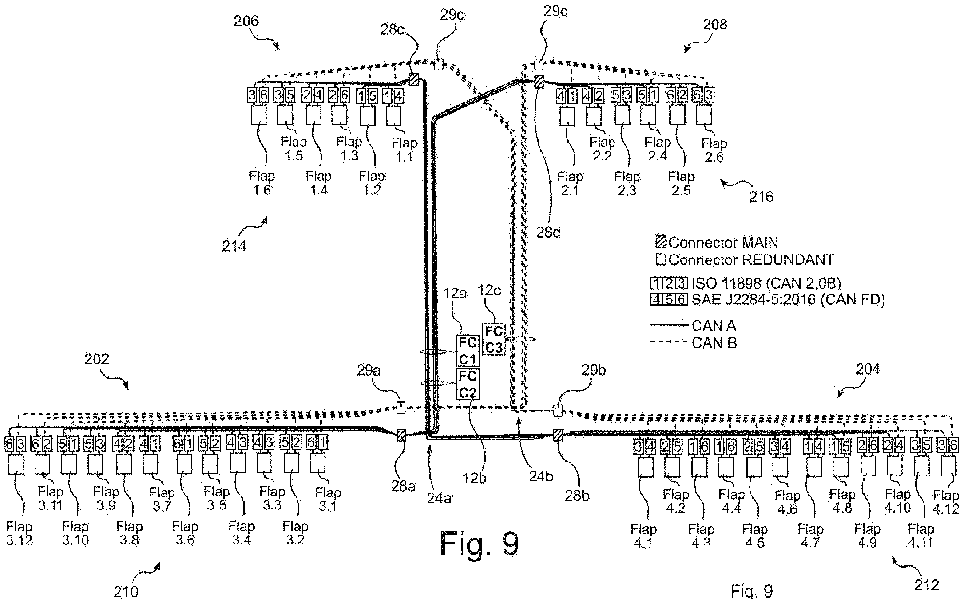

In the following, a more detailed embodiment of the flight control system of the canard type aircraft of Fig. 3 is described on basis of Fig. 8 and 9. In Fig. 3, the lift/thrust units, each having a flap 234 and a propulsion engine 232 with a bus node 250 and a flap actuator or flap actuator arrangement 240 as illustrated in Fig. 6 and Fig. 5, have associated identification numbers shown in inserts in Fig. 3, which are associated to the wings and canards. The six flaps or lift/thrust units 214 of the canard wing 206 have assigned the identification numbers 1.1 to 1.6. The six flaps or lift/thrust units 214 of the canard wing 208 have assigned the identification numbers 2.1 to 2.6. The twelve flaps or lift/thrust units 210 of the main wing 202 have assigned the identification numbers 3.1 to 3.12. The twelve flaps or lift/thrust units 212 of the main wing 204 have assigned the identification numbers 4.1 to 4.12. These identification numbers are also included in Fig. 8 and 9 for identifying the flaps or lift/thrust units.

The identification numbers 1.1, 2.1, 3.1 and 4.1 identify the respectively most inner flap or lift/thrust unit adjacent or near the fuselage 203, and identification numbers 1.6, 2.6, 3.12 and 4.12 identify the outmost flap or lift/thrust unit having a maximum distance from the fuselage 203, and the other flaps or lift/thrust units and their positions along the respective wing or canard are correspondingly identified by the four identification number inserts in Fig. 3. Fig. 8 und 9 use these identification numbers for identifying the respective flap and therewith the respective lift/thrust unit.

Fig. 8 identifies in detail the assignment of the bus nodes of the flaps or lift/thrust units (these terms are used synonymously in the context of the following description) to the first CAN bus sub-system 22a, which is denoted as CAN A, and its six independent CAN busses, represented by continuous lines, as well as to the second independent CAN bus sub-system 24b, which is denoted as CAN B, and its six independent CAN busses, represented by dashed lines. The independent CAN busses of both bus sub-systems are respectively identified by identification numbers 1, 2, 3, 4, 5 and 6 presented in identification boxes included in Fig. 8.

The bus communication via the CAN busses identified by the identification numbers 1, 2 and 3 follows the ISO 11898 standard, to which it was referred as CAN STANDARD, and is referred to in Fig. 8 and 9 as CAN 2.0B, and the bus communication via the independent CAN busses identified by the identification numbers 4, 5 and 6 follows the SAE J2284-5:2016 referred to as CAN FD.

The independent CAN busses identified by the identification numbers 1, 2 and 3 of the first CAN bus sub-system 24a and the independent CAN busses identified by the identification numbers 4, 5 and 6 of the second CAN bus sub-system 24b are arranged in an upper portion of the drawing of Fig. 8 and the independent CAN busses identified by the identification numbers 4, 5 and 6 of the first CAN bus sub-system 24a and the independent CAN busses identified by the identification numbers 1, 2 and 3 of the second CAN bus sub-system 24b are arranged in a lower portion of the drawings of Fig. 8.

For the first flight control computer 12a or FCC1, the second flight control computer 12b or FCC2 and the third flight control computer 12c or FCC3, the bus nodes or lift/thrust units 1.1, 1.2, 4.3, 4.4, 4.7, 4.8, 1.3, 1.4, 4.2, 4.5, 4.9, 4.10, 1.5, 1.6, 4.1, 4.6, 4.11, 4.12 (upper portion of the drawing) belong to a first group of bus nodes and the bus nodes or lift/thrust units 2.1, 2.2, 3.3, 3.4, 3.7, 3.8, 2.3, 2.4, 3.2, 3.5, 3.9, 3.10, 2.5, 2.6, 3.1, 3.6, 3.11 und 3.12 (lower portion of the drawing) belong to a second group of bus nodes. The flight control computers 12a and 12b communicate with the bus nodes of the first group according to the ISO 11898 standard referred to as CAN STANDARD or CAN 2.0B and with the bus nodes of the second group according to SAE J2284-5:2016 standard referred to as CAN FD. The third flight control computer 12c communicates with the bus nodes of the first group according to the SAE J2284-5:2016 standard referred to as CAN FD and with the bus nodes of the second group according to the ISO 11898 standard referred to as CAN STANDARD or CAN 2.0B.

Fig. 9 essentially gives the same information as Fig.8, but shows also the positional relation of the different flaps or lift/thrust units with respect to each other and along the wings and canards of the aircraft. Bus connectors 28a, 28b, 28c and 28d connecting CAN bus sub-system sections of the first CAN bus sub-system 24a may be denoted as main connectors, for reflecting that the control of the bus nodes is normally done via the first CAN bus sub-system 24a, and CAN bus connectors 29a, 29b, 29c and 29d connecting CAN bus sub-system sections of the second CAN bus sub-system 24b correspondingly may be denoted as redundant or auxiliary connectors, for reflecting that the control of the bus nodes is normally done via the first CAN bus sub-system 24a. As in Fig. 8 the independent CAN busses of the first CAN bus sub-system 24a are drawn in continuous lines and the independent CAN busses of the second CAN bus sub-system 24b are drawn in dashed lines. The same identification numbers 1, 2, 3, 4, 5, 6 identifying the respective of the independent CAN busses of both CAN bus sub-systems 24a and 24b are also used in Fig. 9. Therewith the respective CAN bus protocol or CAN standard used for the communication via the respective independent CAN bus is identified.

As already mentioned, resiliency against failures is achieved. A twofold bus communication failure in CAN bus 6 of the first independent CAN bus sub-system 24a denoted as CAN A and in CAN bus 1 of the second independent CAN bus sub-system 24b denoted as CAN B will result in a failure of the lift/thrust units 3.1 and 3.6 of the left main wing 202. Analogously, a twofold failure in the CAN busses 3 and 4 of the CAN A and CAN B bus sub-systems will result in a failure of the lift/thrust units 4.1 and 4.6 in the right main wing 204. Therewith a lift/thrust unit adjacent to the fuselage and a lift/thrust unit still rather close to the fuselage would be affected, so that only a minor impact of the lateral balancing would occur.

Further, a bus communication error in the independent CAN busses 3 and 6 of the CAN A and CAN B bus sub-systems would affect the outermost lift/thrust unit 1.6 of the left canard wing 206 and the outermost lift/thrust unit 4.12 of the right main wing 204, and a bus failure in the CAN busses 6 and 3 of the CAN A and CAN B bus sub-systems would affect the outermost lift/thrust unit 2.6 of the right canard wing 208 and the outermost lift/thrust unit 3.12 of the left main wing 202. Again, the lateral balancing would not be affected very much. The lift/thrust units are assigned to the individual independent CAN busses of both CAN bus sub-systems in a manner that any combination of two bus failures in any pair of these busses would have no major impact on the lateral balancing, so that the flight capability and the controllability of the aircraft is not substantially compromised.

Of course, other assignments of the various bus nodes of the lift/thrust units to the individual CAN busses of the two independent CAN bus sub-systems than shown in Fig. 8 and 9 are possible. Further, of course the number of lift/thrust units per wing or canard can be chosen differently.

The illustrated principle of achieving resiliency against failures based on the present invention can of course also be applied to other kind of aircraft than the aircraft shown in Fig. 2. This principle can of course also be applied to the aircraft shown in Fig. 3, and also to completely different kinds of aircraft, which have such a number of lift/thrust units, propulsion engines, flaps and the like, that not all these aircraft engines are needed for maintaining the flight capability and controllability of the aircraft. For achieving resiliency against twofold or multiple bus failures, the skilled person will be able, when implementing the invention, to assign the various aircraft engines in such a manner to individual busses of a redundant bus system, so that the impact of such twofold or multiple bus faults is minimized.

## Claims

1. Flight control system (10) for an aircraft (200), comprising a flight control computer system (12), which is connected via an electronic or optoelectronic bus system (22) with a plurality of bus nodes (14, 16, 18, 20; 200), which each are configured to at least one of controlling an associated aircraft device (232; 232a, 232b, 232c; 242) based on command messages received from the flight control computer system via the bus system and sending information messages to the flight control computer system via the bus system;
wherein the electronic or optoelectronic bus system is a redundant electronic or optoelectronic bus system (22) comprising plural independent bus sub-systems (22a, 22b), wherein each bus node is configured to communicate with the flight control computer system (12) via two different bus sub-systems (22a, 22b) of the plural independent bus sub-systems, wherein each bus node further is configured to communicate with the flight control computer system on basis of an associated predetermined bus communication protocol via a first bus sub-system (22a) of the respective two different bus sub-systems and on basis of an associated predetermined bus communication protocol via a second bus sub-system (22b) of the respective two different bus sub-systems;
wherein each bus node is connected via one associated communication bus of the first bus sub-system with the flight control computer system and is configured to communicate via this communication bus of the first bus sub-system with the flight control computer system on basis of the associated predetermined bus communication protocol and each bus node is connected via one associated communication bus of the second bus sub-system with the flight control computer system and is configured to communicate via this communication bus of the second bus sub-system with the flight control computer system on basis of the associated predetermined bus communication protocol;
wherein the flight control computer system (12) is a redundant flight control computer system (12) comprising three independent flight control computers (12a, 12b, 12c); and wherein two (12a, 12b) of the flight control computers are connected via the first bus sub-system (22a) with each of the bus nodes and the other (12c) of the flight control computers is connected via the second bus sub-system (22b) with each of the bus nodes;
**characterized in that** each of the plural independent bus sub-systems is composed of plural independent communication busses (24a1, 24a2, 24a3; 24b1, 24b2, 24b3),
wherein plural bus nodes are associated to each of a plurality or all of the plural independent communication busses (24a1, 24a2, 24a3) of the first bus sub-system (24), wherein the bus nodes being associated to the same independent communication bus of the first bus sub-system are configured to communicate via this common independent communication bus with the flight control computer system (12), and plural bus nodes are associated to each of a plurality or all of the plural independent communication busses (24b1, 24b2, 24b3) of the second bus sub-system (24b), wherein the bus nodes being associated to the same independent communication bus of the second bus sub-system are configured to communicate via this common independent communication bus with the flight control computer system (12).

2. Flight control system according to claim 1, wherein each bus node of a first group of the bus nodes is configured to communicate with the flight control computer system (12) via the first bus sub-system (22a) on basis of a first bus communication protocol, which is the associated predetermined bus communication protocol of the bus nodes of the first group for the first bus sub-system, and is configured to communicate with the flight control computer system (12) via the second bus sub-system (22b) on basis of a second bus communication protocol, which is the associated predetermined bus communication protocol of the bus nodes of the first group for the second bus sub-system and differs from the first bus communication protocol, and wherein each bus node of a second group of the bus nodes is configured to communicate with the flight control computer system (12) via the first bus sub-system (22a) on basis of the second bus communication protocol, which is the associated predetermined bus communication protocol of the bus nodes of the second group for the first bus sub-system, and is configured to communicate with the flight control computer system (12) via the second bus sub-system (22b) on basis of the first bus communication protocol, which is the associated predetermined bus communication protocol of the bus nodes of the second group for the second bus sub-system.

3. Flight control system according to one of claim 1 or 2, wherein the bus nodes (14, 16, 18, 20; 200) are CAN bus nodes, the plural independent bus sub-systems are realized as independent CAN bus sub-systems (22a, 22b), and the predetermined bus communication protocols each are one of plural different CAN bus protocols according to a respective CAN standard, including a first CAN bus protocol according to a first CAN standard and a second CAN bus protocol according to a second CAN standard differing from the first CAN standard.

4. Flight control system according to claim 3, wherein each of the independent CAN bus sub-systems (22a, 22b) is composed of plural independent CAN busses (24a1, 24a2, 24a3; 24b1 , 24b2, 24b3) realizing the plural independent communication busses, so that each CAN bus node is connected via one associated CAN bus of a first CAN bus sub-system (22a) with the flight control computer system (12) and each bus node is connected via one associated CAN bus of a second bus CAN sub-system (22b) with the flight control computer system (12);
wherein all of the CAN busses of the first CAN bus sub-system (22a) each are connected with plural associated of the CAN bus nodes and all of the CAN busses of the second CAN bus sub-system (22b) each are connected with plural associated of the CAN bus nodes, wherein the CAN bus nodes being connected with the same CAN bus are configured to communicate via this common CAN bus with the flight control computer system.

5. Flight control system according to claim 2 and according to claim 4,
wherein each CAN bus node of the first group of the bus nodes is configured to communicate with the flight control computer system (12) via the associated CAN bus of the first CAN bus sub-system (22a) on basis of the first CAN bus protocol, and is configured to communicate with the flight control computer system (12) via the associated CAN bus of the second CAN bus sub-system (22b) on basis of the second CAN bus protocol, and wherein each CAN bus node of the second group of the bus nodes is configured to communicate with the flight control computer system (12) via the associated CAN bus of the first CAN bus sub-system (22a) on basis of the second CAN bus protocol, and is configured to communicate with the flight control computer system (12) via the second CAN bus sub-system (22b) on basis of the first CAN bus protocol.

6. Flight control system according to one of claims 3 to 5, wherein one of the first and second CAN bus protocols follows one of the ISO 11898 standard referred to as CAN STANDARD and the SAE J2284-5:2016 standard referred to as CAN FD, and wherein preferably the other of the first and second CAN bus protocols follows the other of the ISO 11898 standard referred to as CAN STANDARD and the SAE J2284-5:2016 standard referred to as CAN FD.

7. Flight control system according to one of claims 1 to 6, wherein the three independent flight control computers (12a, 12b, 12c) are dissimilar flight control computers differing in at least one of the flight control computer hardware and the flight control computer software.

8. Flight control system according to one of claims 1 to 7, wherein at least one (12a, 12b) of the flight control computers (12a, 12b, 12c) is configured to communicate with the bus nodes or CAN bus nodes of a/the first group on basis of the first bus communication protocol or first CAN bus protocol and with the bus nodes or CAN bus nodes of a/the second group on basis of the second bus communication protocol or second first CAN bus protocol, and wherein at least one other (12c) of the flight control computers (12a, 12b, 12c) is configured to communicate with the bus nodes or CAN bus nodes of the first group on basis of the second bus communication protocol or second CAN bus protocol and with the bus nodes or CAN bus nodes of the second group on basis of the first bus communication protocol or first CAN bus protocol.

9. Flight control system according to one of claims 1 to 8, wherein the flight control computers (12a, 12b, 12c) are configured to elect one of the flight control computers to be the flight control computer in control and therewith to elect the other two flight control computers to be a supervising flight control computer,
wherein each flight control computer (12a, 12b, 12c) is configured to operate as flight control computer in control and to control the aircraft (200) based on command messages sent to bus nodes or CAN bus nodes via the respective independent bus sub-system or independent CAN bus sub-system (22a; 22b) and possibly based on information messages received from bus nodes or CAN bus nodes via the respective independent bus sub-system or independent CAN bus sub-system,
and wherein at least two, preferably all three flight control computers (12a, 12b, 12c) are configured to operate as a supervising flight control computer and to monitor at least one of the operation of the flight control computer currently being the flight control computer in control and messages sent via the respective independent bus sub-system or independent CAN bus sub-system;
wherein preferably the flight control computers (12a, 12b, 12c) or at least the flight control computers configured to be a supervising flight control computer are configured to elect a different flight control computer than the flight control computer currently operating as flight control computer in control as new flight control computer in control, based on the monitoring done by the flight control computers operating as supervising flight control computers.

10. Aircraft (200) comprising a flight control system (10) according to one of the preceding claims; wherein the aircraft (200) preferably is at least one of a single pilot aircraft, an aircraft having a vertical take-off and landing capability and an aircraft of the canard type.

11. Aircraft according to claim 10, wherein the aircraft (200) has plural aircraft devices of a common type which each have associated a respective bus node or CAN bus node (200) of the flight control system, wherein the aircraft devices are arranged in a number and configuration at one or both of the fuselage (203) of the aircraft and wings (202, 204, 206, 208) of the aircraft to achieve a resiliency against failures, such that various subgroups of the plural aircraft devices each comprising at least two of the aircraft devices of the common type may fail without endangering the flight capability and the controllability of the aircraft.

12. Aircraft according to claims 11, wherein the bus nodes or CAN bus nodes of the aircraft devices of the common type are associated in such a number and manner to a respective independent communication bus or CAN bus of the first bus sub-system or first CAN bus sub-system (22a) and are associated in such a number and manner to a respective independent communication bus or CAN bus of the second bus sub-system or second CAN bus sub-system (22b), that any combination of two independent communication buses or CAN busses of the flight control system may fail without substantially compromising the flight capability and the controllability of the aircraft.

13. Aircraft according to claim 11 or 12, wherein the aircraft devices of the common type or of a first common type are flaps (234) having air control surfaces, wherein the flaps are mounted in a moveable manner to wings (234) of the aircraft, wherein each flap has associated at least one flap actuator (240) and a bus node or CAN bus node (250), which is configured to control an deflection angle of the flap (234) by controlling the at least one flap actuator (240) based on command messages received from the flight control computer system (12).

14. Aircraft according to one of claims 11 to 13, wherein the aircraft devices of the common type or of a second common type are propulsion engines (232; 232a, 323b, 232c), wherein each propulsion engine has associated a bus node or CAN bus node (250), which is configured to control the operation of the propulsion engine based on command messages received from the flight control computer system (12).

15. Aircraft according to claims 13 and 14, wherein the propulsion engines (232; 232a, 323b, 232c) are mounted to or integrated with an associated one (234) of the flaps, so that a thrust direction of the propulsion engines can be controlled by controlling the deflection angle of the respective flap (234) by means of the respective at least one flap actuator (240) and the respective bus node or CAN bus node (250) associated thereto.

16. Aircraft according to claim 15, wherein plural or all flaps (234) which serve to control a thrust direction each have associated only one (232) of the propulsion engines, which is mounted to or integrated with the respective flap (234).

17. Aircraft according to claim 15 or 16, wherein plural or all flaps (234) which serve to control a thrust direction each have associated plural (232a, 323b, 232c) of the propulsion engines, which are mounted to or integrated with the respective flap (234);
wherein preferably a propulsion module (230) comprising plural propulsion engines (232a, 323b, 232c) is mounted to or integrated with the respective flap (234).

18. Aircraft according to one of claims 15 to 17, wherein for each flap (234) having associated one propulsion engine (232) or plural propulsion engines (232a, 323b, 232c) the at least one flap actuator (240) of the flap and the associated propulsion engine or plural propulsion engines have associated a common bus node or CAN bus node (250), which is configured to control the propulsion engine or propulsion engines and the at least one flap actuator based on command messages received from the flight control computer system (12).

## Patentansprüche

1. Flugsteuerungssystem (10) für ein Flugzeug (200), umfassend ein Flugsteuerungscomputersystem (12), welches über ein elektronisches oder optoelektronisches Bussystem (22) mit einer Mehrzahl von Busknoten (14, 16, 18, 20; 200) verbunden ist, welche jeweils eingerichtet sind für wenigstens eines aus einem Steuern einer zugeordneten Flugzeugvorrichtung (232; 232a, 232b, 232c; 242) auf Grundlage von über das Bussystem von dem Flugsteuerungscomputersystem empfangenen Befehlsnachrichten und einem Senden von Informationsnachrichten über das Bussystem an das Flugsteuerungscomputersystem;
wobei das elektronische oder optoelektronische Bussystem ein redundantes elektronisches oder optoelektronisches Bussystem (22) ist, welches mehrere unabhängige Busuntersysteme (22a, 22b) umfasst, wobei jeder Busknoten dazu eingerichtet ist, über zwei verschiedene Busuntersysteme (22a, 22b) der mehreren unabhängigen Busuntersysteme mit dem Flugsteuerungscomputersystem (12) zu kommunizieren, wobei jeder Busknoten ferner dazu eingerichtet ist, auf Grundlage eines zugeordneten vorbestimmten Buskommunikationsprotokolls über ein erstes Busuntersystem (22a) der jeweiligen zwei verschiedenen Busuntersysteme und auf Grundlage eines zugeordneten vorbestimmten Buskommunikationsprotokolls über ein zweites Busuntersystem (22b) der jeweiligen zwei verschiedenen Busuntersysteme mit dem Flugsteuerungscomputersystem zu kommunizieren;
wobei jeder Busknoten über einen zugeordneten Kommunikationsbus des ersten Busuntersystems mit dem Flugsteuerungscomputersystem verbunden ist und dazu eingerichtet ist, über diesen Kommunikationsbus des ersten Busuntersystems auf Grundlage des zugeordneten vorbestimmten Buskommunikationsprotokolls mit dem Flugsteuerungscomputersystem zu kommunizieren, und wobei jeder Busknoten über einen zugeordneten Kommunikationsbus des zweiten Busuntersystems mit dem Flugsteuerungscomputersystem verbunden ist und dazu eingerichtet ist, über diesen Kommunikationsbus des zweiten Busuntersystems auf Grundlage des zugeordneten vorbestimmten Buskommunikationsprotokolls mit dem Flugsteuerungscomputersystem zu kommunizieren;
wobei das Flugsteuerungscomputersystem (12) ein redundantes Flugsteuerungscomputersystem (12) ist, welches drei unabhängige Flugsteuerungscomputer (12a, 12b, 12c) umfasst; und wobei zwei (12a, 12b) der Flugsteuerungscomputer über das erste Busuntersystem (22a) mit jedem der Busknoten verbunden sind und der andere (12c) der Flugsteuerungscomputer über das zweite Busuntersystem (22b) mit jedem der Busknoten verbunden ist;
**dadurch gekennzeichnet, dass** jedes der mehreren unabhängigen Busuntersysteme aus mehreren unabhängigen Kommunikationsbussen (24a1, 24a2, 24a3; 24b1, 24b2, 24b3) zusammengesetzt ist,
wobei mehrere Busknoten jedem einer Mehrzahl oder allen der mehreren unabhängigen Kommunikationsbusse (24a1, 24a2, 24a3) des ersten Busuntersystems (24) zugeordnet sind, wobei die Busknoten, welche dem gleichen unabhängigen Kommunikationsbus des ersten Busuntersystems zugeordnet sind, dazu eingerichtet sind, über diesen gemeinsamen unabhängigen Kommunikationsbus mit dem Flugsteuerungscomputersystem (12) zu kommunizieren, und wobei mehrere Busknoten jedem einer Mehrzahl oder allen der mehreren unabhängigen Kommunikationsbusse (24b1, 24b2, 24b3) des zweiten Busuntersystems (24b) zugeordnet sind, wobei die Busknoten, welche dem gleichen unabhängigen Kommunikationsbus des zweiten Busuntersystems zugeordnet sind, dazu eingerichtet sind, über diesen gemeinsamen unabhängigen Kommunikationsbus mit dem Flugsteuerungscomputersystem (12) zu kommunizieren.

2. Flugsteuerungssystem nach Anspruch 1, wobei jeder Busknoten einer ersten Gruppe der Busknoten dazu eingerichtet ist, mit dem Flugsteuerungscomputersystem (12) über das erste Busuntersystem (22a) auf Grundlage eines ersten Buskommunikationsprotokolls zu kommunizieren, welches das zugeordnete vorbestimmte Buskommunikationsprotokoll der Busknoten der ersten Gruppe für das erste Busuntersystem ist, und dazu eingerichtet ist, mit dem Flugsteuerungscomputersystem (12) über das zweite Busuntersystem (22b) auf Grundlage eines zweiten Buskommunikationsprotokolls zu kommunizieren, welches das zugeordnete vorbestimmte Buskommunikationsprotokoll der Busknoten der ersten Gruppe für das zweite Busuntersystem ist und sich von dem ersten Buskommunikationsprotokoll unterscheidet, und wobei jeder Busknoten einer zweiten Gruppe der Busknoten dazu eingerichtet ist, mit dem Flugsteuerungscomputersystem (12) über das erste Busuntersystem (22a) auf Grundlage des zweiten Buskommunikationsprotokolls zu kommunizieren, welches das zugeordnete vorbestimmte Buskommunikationsprotokoll der Busknoten der zweiten Gruppe für das erste Busuntersystem ist, und dazu eingerichtet ist, mit dem Flugsteuerungscomputersystem (12) über das zweite Busuntersystem (22b) auf Grundlage des ersten Buskommunikationsprotokolls zu kommunizieren, welches das zugeordnete vorbestimmte Buskommunikationsprotokoll der Busknoten der zweiten Gruppe für das zweite Busuntersystem ist.

3. Flugsteuerungssystem nach einem der Ansprüche 1 oder 2, wobei die Busknoten (14, 16, 18, 20; 200) CAN-Busknoten sind, die mehreren unabhängigen Busuntersysteme als unabhängige CAN-Busuntersysteme (22a, 22b) realisiert sind und die vorbestimmten Buskommunikationsprotokolle jeweils eines von mehreren verschiedenen CAN-Busprotokollen gemäß einem jeweiligen CAN-Standard sind, welche ein erstes CAN-Busprotokoll gemäß einem ersten CAN-Standard und ein zweites CAN-Busprotokoll gemäß einem von dem ersten CAN-Standard verschiedenen zweiten CAN-Standard umfassen.

4. Flugsteuerungssystem nach Anspruch 3, wobei jedes der unabhängigen CAN-Busuntersysteme (22a, 22b) aus mehreren unabhängigen CAN-Bussen (24a1, 24a2, 24a3; 24b1, 24b2, 24b3) zusammengesetzt ist, welche die mehreren unabhängigen Kommunikationsbusse realisieren, so dass jeder CAN-Busknoten über einen zugeordneten CAN-Bus eines ersten CAN-Busuntersystems (22a) mit dem Flugsteuerungscomputersystem (12) verbunden ist und jeder Busknoten über einen zugeordneten CAN-Bus eines zweiten Bus-CAN-Untersystems (22b) mit dem Flugsteuerungscomputersystem (12) verbunden ist;
wobei alle der CAN-Busse des ersten CAN-Busuntersystems (22a) jeweils mit mehreren zugeordneten der CAN-Busknoten verbunden sind und alle der CAN-Busse des zweiten CAN-Busuntersystems (22b) jeweils mit mehreren zugeordneten der CAN-Busknoten verbunden sind, wobei die CAN-Busknoten, welche mit dem gleichen CAN-Bus verbunden sind, dazu eingerichtet sind, über diesen gemeinsamen CAN-Bus mit dem Flugsteuerungscomputersystem zu kommunizieren.

5. Flugsteuerungssystem nach Anspruch 2 und nach Anspruch 4, wobei jeder CAN-Busknoten der ersten Gruppe der Busknoten dazu eingerichtet ist, auf Grundlage des ersten CAN-Busprotokolls über den zugeordneten CAN-Bus des ersten CAN-Busuntersystems (22a) mit dem Flugsteuerungscomputersystem (12) zu kommunizieren, und dazu eingerichtet ist, auf Grundlage des zweiten CAN-Busprotokolls über den zugeordneten CAN-Bus des zweiten CAN-Busuntersystems (22b) mit dem Flugsteuerungscomputersystem (12) zu kommunizieren, und wobei jeder CAN-Busknoten der zweiten Gruppe der Busknoten dazu eingerichtet ist, auf Grundlage des zweiten CAN-Busprotokolls über den zugeordneten CAN-Bus des ersten CAN-Busuntersystems (22a) mit dem Flugsteuerungscomputersystem (12) zu kommunizieren, und dazu eingerichtet ist, auf Grundlage des ersten CAN-Busprotokolls über das zweite CAN-Busuntersystem (22b) mit dem Flugsteuerungscomputersystem (12) zu kommunizieren.

6. Flugsteuerungssystem nach einem der Ansprüche 3 bis 5, wobei eines aus dem ersten und dem zweiten CAN-Busprotokoll einem aus dem als CAN STANDARD bezeichneten Standard ISO 11898 und dem als CAN FD bezeichneten Standard SAE J2284-5:2016 folgt und wobei vorzugsweise das andere aus dem ersten und dem zweiten CAN-Busprotokoll dem anderen aus dem als CAN STANDARD bezeichneten Standard ISO 11898 und dem als CAN FD bezeichneten Standard SAE J2284-5:2016 folgt.

7. Flugsteuerungssystem nach einem der Ansprüche 1 bis 6, wobei die drei unabhängigen Flugsteuerungscomputer (12a, 12b, 12c) unterschiedliche Flugsteuerungscomputer sind, welche sich in wenigstens einem aus der Flugsteuerungscomputerhardware und der Flugsteuerungscomputersoftware unterscheiden.

8. Flugsteuerungssystem nach einem der Ansprüche 1 bis 7, wobei wenigstens einer (12a, 12b) der Flugsteuerungscomputer (12a, 12b, 12c) dazu eingerichtet ist, auf Grundlage des ersten Buskommunikationsprotokolls oder ersten CAN-Busprotokolls mit den Busknoten oder CAN-Busknoten einer/der ersten Gruppe und auf Grundlage des zweiten Buskommunikationsprotokolls oder zweiten CAN-Busprotokolls mit den Busknoten oder CAN-Busknoten einer/der zweiten Gruppe zu kommunizieren, und wobei wenigstens ein anderer (12c) der Flugsteuerungscomputer (12a, 12b, 12c) dazu eingerichtet ist, auf Grundlage des zweiten Buskommunikationsprotokolls oder zweiten CAN-Busprotokolls mit den Busknoten oder CAN-Busknoten der ersten Gruppe und auf Grundlage des ersten Buskommunikationsprotokolls oder ersten CAN-Busprotokolls mit den Busknoten oder CAN-Busknoten der zweiten Gruppe zu kommunizieren.

9. Flugsteuerungssystem nach einem der Ansprüche 1 bis 8, wobei die Flugsteuerungscomputer (12a, 12b, 12c) dazu eingerichtet sind, einen der Flugsteuerungscomputer (12a, 12b, 12c) als den Flugsteuerungscomputer in Steuerung auszuwählen und damit die anderen zwei Flugsteuerungscomputer als einen überwachenden Flugsteuerungscomputer auszuwählen,
wobei jeder Flugsteuerungscomputer (12a, 12b, 12c) dazu eingerichtet ist, als Flugsteuerungscomputer in Steuerung zu arbeiten und das Flugzeug (200) auf Grundlage von über das jeweilige unabhängige Busuntersystem oder unabhängige CAN-Busuntersystem (22a; 22b) zu Busknoten oder CAN-Busknoten gesendeten Befehlsnachrichten und möglicherweise auf Grundlage von über das jeweilige unabhängige Busuntersystem oder unabhängige CAN-Busuntersystem von Busknoten oder CAN-Busknoten empfangenen Informationsnachrichten zu steuern,
und wobei wenigstens zwei, vorzugsweise alle drei Flugsteuerungscomputer (12a, 12b, 12c) dazu eingerichtet sind, als ein überwachender Flugsteuerungscomputer zu arbeiten und wenigstens eines aus dem Betrieb des Flugsteuerungscomputers, welcher aktuell der Flugsteuerungscomputer in Steuerung ist, und über das jeweilige unabhängige Busuntersystem oder unabhängige CAN-Busuntersystem gesendete Nachrichten zu überwachen; wobei vorzugsweise die Flugsteuerungscomputer (12a, 12b, 12c) oder wenigstens die Flugsteuerungscomputer, welche dazu eingerichtet sind, ein überwachender Flugsteuerungscomputer zu sein, dazu eingerichtet sind, einen anderen Flugsteuerungscomputer als den Flugsteuerungscomputer, welcher aktuell als Flugsteuerungscomputer in Steuerung arbeitet, auf Grundlage der durch die Flugsteuerungscomputer, welche als überwachende Flugsteuerungscomputer arbeiten, getätigten Überwachung als neuen Flugsteuerungscomputer in Steuerung auszuwählen.

10. Flugzeug (200), umfassend ein Flugsteuerungssystem (10) nach einem der vorhergehenden Ansprüche; wobei das Flugzeug (200) vorzugsweise wenigstens eines ist aus einem Flugzeug mit einem einzigen Piloten, einem Flugzeug mit einer vertikalen Start- und Landefähigkeit und einem Flugzeug vom Canard-Typ.

11. Flugzeug nach Anspruch 10, wobei das Flugzeug (200) mehrere Flugzeugvorrichtungen eines gemeinsamen Typs aufweist, welche jeweils einen zugeordneten jeweiligen Busknoten oder CAN-Busknoten (200) des Flugsteuerungssystems aufweist, wobei die Flugzeugvorrichtungen in einer Anzahl und einer Konfiguration an einem oder beiden aus dem Rumpf (203) des Flugzeugs und Flügeln (202, 204, 206, 208) des Flugzeugs angeordnet sind, um eine Widerstandsfähigkeit gegen Störungen zu erreichen, so dass verschiedene Untergruppen der mehreren Flugzeugvorrichtungen, welche jeweils wenigstens zwei der Flugzeugvorrichtungen des gemeinsamen Typs umfassen, ausfallen können, ohne die Flugfähigkeit und die Steuerbarkeit des Flugzeugs zu gefährden.

12. Flugzeug nach Anspruch 11, wobei die Busknoten oder CAN-Busknoten der Flugzeugvorrichtungen des gemeinsamen Typs in einer derartigen Anzahl und Weise einem jeweiligen unabhängigen Kommunikationsbus oder CAN-Bus des ersten Busuntersystems oder ersten CAN-Busuntersystems (22a) zugeordnet sind und in einer derartigen Anzahl und Weise einem jeweiligen unabhängigen Kommunikationsbus oder CAN-Bus des zweiten Busuntersystems oder zweiten CAN-Busuntersystems (22b) zugeordnet sind, dass jegliche Kombination von zwei unabhängigen Kommunikationsbussen oder CAN-Bussen des Flugsteuerungssystems ausfallen können, ohne im Wesentlichen die Flugfähigkeit und die Steuerbarkeit des Flugzeugs zu beeinträchtigen.

13. Flugzeug nach Anspruch 11 oder 12, wobei die Flugzeugvorrichtungen des gemeinsamen Typs oder eines ersten gemeinsamen Typs Klappen (234) sind, welche Luftsteuerungsflächen aufweisen, wobei die Klappen in einer beweglichen Weise an Flügeln (234) des Flugzeugs montiert sind, wobei jede Klappe wenigstens einen zugeordneten Klappenaktuator (240) und einen zugeordneten Busknoten oder CAN-Busknoten (250) aufweist, welcher dazu eingerichtet ist, einen Ablenkwinkel der Klappe (234) durch Steuern des wenigstens einen Klappenaktuators (240) auf Grundlage von von dem Flugsteuerungscomputersystem (12) empfangenen Befehlssignalen zu steuern.

14. Flugzeug nach einem der Ansprüche 11 bis 13, wobei die Flugzeugvorrichtungen des gemeinsamen Typs oder eines zweiten gemeinsamen Typs Antriebsmotoren (232; 232a, 323b, 232c) sind, wobei jeder Antriebsmotor einen zugeordneten Busknoten oder CAN-Busknoten (250) aufweist, welcher dazu eingerichtet ist, auf Grundlage von von dem Flugsteuerungscomputersystem (12) empfangenen Befehlsnachrichten den Betrieb des Antriebsmotors zu steuern.

15. Flugzeug nach den Ansprüchen 13 und 14, wobei die Antriebsmotoren (232; 232a, 323b, 232c) an einer zugeordneten (234) der Klappen montiert oder damit integral sind, so dass eine Schubrichtung der Antriebsmotoren durch Steuern des Ablenkwinkels der jeweiligen Klappe (234) mittels des jeweiligen wenigstens einen Klappenaktuators (240) und des jeweiligen zugeordneten Busknotens oder CAN-Busknotens (250) gesteuert werden kann.

16. Flugzeug nach Anspruch 15, wobei mehrere oder alle Klappen (234), welche dazu dienen, eine Schubrichtung zu steuern, jeweils nur einen (232) zugeordneten der Antriebsmotoren aufweisen, welcher an der jeweiligen Klappe (234) montiert oder damit integral ist.

17. Flugzeug nach Anspruch 15 oder 16, wobei mehrere oder alle Klappen (234), welche dazu dienen, eine Schubrichtung zu steuern, jeweils mehrere (232a, 323b, 232c) zugeordnete der Antriebsmotoren aufweisen, welche an der jeweiligen Klappe (234) montiert oder damit integral sind;
wobei vorzugsweise ein Antriebsmodul (230), welches mehrere Antriebsmotoren (232a, 323b, 232c) umfasst, an der jeweiligen Klappe (234) montiert oder damit integral ist.

18. Flugzeug nach einem der Ansprüche 15 bis 17, wobei für jede Klappe (234), welche einen zugeordneten Antriebsmotor (232) oder mehrere zugeordnete Antriebsmotoren (232a, 323b, 232c) aufweist, der wenigstens eine Klappenaktuator (240) der Klappe und der zugeordnete Antriebsmotor oder die mehreren zugeordneten Antriebsmotoren einen gemeinsamen zugeordneten Busknoten oder CAN-Busknoten (250) aufweisen, welcher dazu eingerichtet ist, den Antriebsmotor oder die Antriebsmotoren und den wenigstens einen Klappenaktuator auf Grundlage von von dem Flugsteuerungscomputersystem (12) empfangenen Befehlsnachrichten zu steuern.

## Revendications

1. Système de commande de vol (10) destiné à un aéronef (200), comprenant un système d'ordinateurs de commande de vol (12), qui est connecté, par l'intermédiaire d'un système de bus électronique ou optoélectronique (22), à une pluralité de noeuds de bus (14, 16, 18, 20 ; 200), qui sont configurés chacun pour commander un dispositif d'aéronef associé (232 ; 232a, 232b, 232c ; 242) sur la base de messages d'instruction reçus du système d'ordinateurs de commande de vol par l'intermédiaire du système de bus et/ou pour envoyer des messages d'informations au système d'ordinateurs de commande de vol par l'intermédiaire du système de bus ;
dans lequel le système de bus électronique ou optoélectronique est un système de bus électronique ou optoélectronique redondant (22) comprenant plusieurs sous-systèmes de bus indépendants (22a, 22b), dans lequel chaque noeud de bus est configuré pour communiquer avec le système d'ordinateurs de commande de vol (12) par l'intermédiaire de deux sous-systèmes de bus différents (22a, 22b) des plusieurs sous-systèmes de bus indépendants, dans lequel chaque noeud de bus est en outre configuré pour communiquer avec le système d'ordinateurs de commande de vol sur la base d'un protocole de communication de bus prédéterminé associé par l'intermédiaire d'un premier sous-système de bus (22a) des deux sous-systèmes de bus différents respectifs et sur la base d'un protocole de communication de bus prédéterminé associé par l'intermédiaire d'un second sous-système de bus (22b) des deux sous-systèmes de bus différents respectifs ;
dans lequel chaque noeud de bus est connecté, par l'intermédiaire d'un bus de communication associé du premier sous-système de bus, au système d'ordinateurs de commande de vol et est configuré pour communiquer, par l'intermédiaire de ce bus de communication du premier sous-système de bus, avec le système d'ordinateurs de commande de vol sur la base du protocole de communication de bus prédéterminé associé et chaque noeud de bus est connecté, par l'intermédiaire d'un bus de communication associé du second sous-système de bus, au système d'ordinateurs de commande de vol et est configuré pour communiquer, par l'intermédiaire de ce bus de communication du second sous-système de bus, avec le système d'ordinateurs de commande de vol sur la base du protocole de communication de bus prédéterminé associé ;
dans lequel le système d'ordinateurs de commande de vol (12) est un système d'ordinateurs de commande de vol redondant (12) comprenant trois ordinateurs de commande de vol indépendants (12a, 12b, 12c) ; et dans lequel deux ordinateurs (12a, 12b) des ordinateurs de commande de vol sont connectés, par l'intermédiaire du premier sous-système de bus (22a), à chacun des noeuds de bus et l'autre ordinateur (12c) des ordinateurs de commande de vol est connecté, par l'intermédiaire du second sous-système de bus (22b), à chacun des noeuds de bus ;
**caractérisé en ce que** chacun des plusieurs sous-systèmes de bus indépendants est constitué de plusieurs bus de communication indépendants (24a1, 24a2, 24a3 ; 24b1, 24b2, 24b3),
dans lequel plusieurs noeuds de bus sont associés à chaque bus d'une pluralité des plusieurs bus de communication indépendants (24a1, 24a2, 24a3), ou à tous ces derniers, du premier sous-système de bus (24), dans lequel les noeuds de bus qui sont associés au même bus de communication indépendant du premier sous-système de bus sont configurés pour communiquer, par l'intermédiaire de ce bus de communication indépendant commun, avec le système d'ordinateurs de commande de vol (12), et plusieurs noeuds de bus sont associés à chaque bus d'une pluralité des plusieurs bus de communication indépendants (24b1, 24b2, 24b3), ou à tous ces derniers, du second sous-système de bus (24b), dans lequel les noeuds de bus qui sont associés au même bus de communication indépendant du second sous-système de bus sont configurés pour communiquer, par l'intermédiaire de ce bus de communication indépendant commun, avec le système d'ordinateurs de commande de vol (12) .

2. Système de commande de vol selon la revendication 1, dans lequel chaque noeud de bus d'un premier groupe des noeuds de bus est configuré pour communiquer avec le système d'ordinateurs de commande de vol (12) par l'intermédiaire du premier sous-système de bus (22a) sur la base d'un premier protocole de communication de bus, qui est le protocole de communication de bus prédéterminé associé des noeuds de bus du premier groupe pour le premier sous-système de bus, et est configuré pour communiquer avec le système d'ordinateurs de commande de vol (12) par l'intermédiaire du second sous-système de bus (22b) sur la base d'un second protocole de communication de bus, qui est le protocole de communication de bus prédéterminé associé des noeuds de bus du premier groupe pour le second sous-système de bus et qui diffère du premier protocole de communication de bus, et dans lequel chaque noeud de bus d'un second groupe des noeuds de bus est configuré pour communiquer avec le système d'ordinateurs de commande de vol (12) par l'intermédiaire du premier sous-système de bus (22a) sur la base du second protocole de communication de bus, qui est le protocole de communication de bus prédéterminé associé des noeuds de bus du second groupe pour le premier sous-système de bus, et est configuré pour communiquer avec le système d'ordinateurs de commande de vol (12) par l'intermédiaire du second sous-système de bus (22b) sur la base du premier protocole de communication de bus, qui est le protocole de communication de bus prédéterminé associé des noeuds de bus du second groupe pour le second sous-système de bus.

3. Système de commande de vol selon l'une des revendications 1 et 2, dans lequel les noeuds de bus (14, 16, 18, 20 ; 200) sont des noeuds de bus CAN, les plusieurs sous-systèmes de bus indépendants sont réalisés en tant que sous-systèmes de bus CAN indépendants (22a, 22b), et les protocoles de communication de bus prédéterminés sont individuellement un protocole de plusieurs protocoles de bus CAN différents conformes à une norme CAN respective, comprenant un premier protocole de bus CAN conforme à une première norme CAN et un second protocole de bus CAN conforme à une seconde norme CAN différente de la première norme CAN.

4. Système de commande de vol selon la revendication 3, dans lequel chacun des sous-systèmes de bus CAN indépendants (22a, 22b) est constitué de plusieurs bus CAN indépendants (24a1, 24a2, 24a3 ; 24b1, 24b2, 24b3) réalisant les plusieurs bus de communication indépendants, de sorte que chaque noeud de bus CAN soit connecté, par l'intermédiaire d'un bus CAN associé d'un premier sous-système de bus CAN (22a), au système d'ordinateurs de commande de vol (12) et que chaque noeud de bus soit connecté, par l'intermédiaire d'un bus CAN associé d'un second sous-système de bus CAN (22b), au système d'ordinateurs de commande de vol (12) ;
dans lequel tous les bus CAN du premier sous-système de bus CAN (22a) sont individuellement connectés à plusieurs noeuds associés des noeuds de bus CAN et tous les bus CAN du second sous-système de bus CAN (22b) sont individuellement connectés à plusieurs noeuds associés des noeuds de bus CAN, dans lequel les noeuds de bus CAN qui sont connectés au même bus CAN sont configurés pour communiquer, par l'intermédiaire de ce bus CAN commun, avec le système d'ordinateurs de commande de vol.

5. Système de commande de vol selon la revendication 2 et selon la revendication 4, dans lequel chaque noeud de bus CAN du premier groupe des noeuds de bus est configuré pour communiquer avec le système d'ordinateurs de commande de vol (12) par l'intermédiaire du bus CAN associé du premier sous-système de bus CAN (22a) sur la base du premier protocole de bus CAN, et est configuré pour communiquer avec le système d'ordinateurs de commande de vol (12) par l'intermédiaire du bus CAN associé du second sous-système de bus CAN (22b) sur la base du second protocole de bus CAN, et dans lequel chaque noeud de bus CAN du second groupe des noeuds de bus est configuré pour communiquer avec le système d'ordinateurs commande de vol (12) par l'intermédiaire du bus CAN associé du premier sous-système de bus CAN (22a) sur la base du second protocole de bus CAN, et est configuré pour communiquer avec le système d'ordinateurs de commande de vol (12) par l'intermédiaire du second sous-système de bus CAN (22b) sur la base du premier protocole de bus CAN.

6. Système de commande de vol selon l'une des revendications 3 à 5, dans lequel un protocole des premier et second protocoles de bus CAN suit l'une de la norme ISO 11898 désignée sous le nom de CAN STANDARD et de la norme SAE J2284-5:2016 désignée sous le nom de CAN FD, et dans lequel, de préférence, l'autre protocole des premier et second protocoles de bus CAN suit l'autre de la norme ISO 11898 désignée sous le nom de CAN STANDARD et de la norme SAE J2284-5:2016 désignée sous le nom de CAN FD.

7. Système de commande de vol selon l'une des revendications 1 à 6, dans lequel les trois ordinateurs de commande de vol indépendants (12a, 12b, 12c) sont des ordinateurs de commande de vol non-similaires qui diffèrent du point de vue d'au moins l'un parmi le matériel d'ordinateur de commande de vol et le logiciel d'ordinateur de commande de vol.

8. Système de commande de vol selon l'une des revendications 1 à 7, dans lequel au moins un ordinateur (12a, 12b) des ordinateurs de commande de vol (12a, 12b, 12c) est configuré pour communiquer avec les noeuds de bus ou avec les noeuds de bus CAN d'un/du premier groupe sur la base du premier protocole de communication de bus ou du premier protocole de bus CAN et avec les noeuds de bus ou les noeuds de bus CAN d'un/du second groupe sur la base du second protocole de communication de bus ou du second premier protocole de bus CAN, et dans lequel au moins un autre ordinateur (12c) des ordinateurs de commande de vol (12a, 12b, 12c) est configuré pour communiquer avec les noeuds de bus ou avec les noeuds de bus CAN du premier groupe sur la base du second protocole de communication de bus ou du second protocole de bus CAN et avec les noeuds de bus ou les noeuds de bus CAN du second groupe sur la base du premier protocole de communication de bus ou du premier protocole de bus CAN.

9. Système de commande de vol selon l'une des revendications 1 à 8, dans lequel les ordinateurs de commande de vol (12a, 12b, 12c) sont configurés pour choisir l'un des ordinateurs de commande de vol comme devant être l'ordinateur de commande de vol lors d'une commande et, parallèlement, pour choisir les deux autres ordinateurs de commande de vol comme devant être un ordinateur de commande de vol de supervision,
dans lequel chaque ordinateur de commande de vol (12a, 12b, 12c) est configuré pour fonctionner en tant qu'ordinateur de commande de vol lors d'une commande et pour commander l'aéronef (200) sur la base de messages d'instruction envoyés à des noeuds de bus ou à des noeuds de bus CAN par l'intermédiaire du sous-système de bus indépendant ou du sous-système de bus CAN indépendant (22a ; 22b) respectif et, possiblement, sur la base de messages d'informations reçus de noeuds de bus ou de noeuds de bus CAN par l'intermédiaire du sous-système de bus indépendant ou du sous-système de bus CAN indépendant respectif,
et dans lequel au moins deux ordinateurs, de préférence les trois ordinateurs de commande de vol (12a, 12b, 12c), sont configurés pour fonctionner en tant qu'ordinateur de commande de vol de supervision et pour surveiller au moins l'un du fonctionnement de l'ordinateur de commande de vol qui est l'ordinateur de commande de vol courant lors d'une commande et de messages envoyés par l'intermédiaire du sous-système de bus indépendant ou du sous-système de bus CAN indépendant respectif ;
dans lequel, de préférence, les ordinateurs de commande de vol (12a, 12b, 12c) ou au moins les ordinateurs de commande de vol configurés comme étant un ordinateur de commande de vol de supervision sont configurés pour choisir un ordinateur de commande de vol différent de l'ordinateur de commande de vol en cours de fonctionnement en tant qu'ordinateur de commande de vol lors d'une commande en tant que nouvel ordinateur de commande de vol lors d'une commande, sur la base de la surveillance effectuée par les ordinateurs de commande de vol fonctionnant en tant qu'ordinateurs de commande de vol de supervision.

10. Aéronef (200) comprenant un système de commande de vol (10) selon l'une des revendications précédentes ; dans lequel l'aéronef (200) est, de préférence, au moins l'un parmi un aéronef à un seul pilote, un aéronef à capacité de décollage et d'atterrissage verticaux et un aéronef du type canard.

11. Aéronef selon la revendication 10, dans lequel l'aéronef (200) comporte plusieurs dispositifs d'aéronef d'un type commun qui comportent individuellement un noeud de bus ou un noeud de bus CAN (200) respectif associé du système de commande de vol, dans lequel les dispositifs d'aéronef sont agencés selon un nombre et une configuration au niveau du fuselage (203) de l'aéronef et/ou des ailes (202, 204, 206, 208) de l'aéronef pour obtenir une résilience contre des défaillances, de sorte que divers sous-groupes des plusieurs dispositifs d'aéronef comprenant individuellement au moins deux des dispositifs d'aéronef du type commun puissent présenter une défaillance sans mettre en danger la capacité de vol et l'aptitude à la commande de l'aéronef.

12. Aéronef selon la revendication 11, dans lequel les noeuds de bus ou les noeuds de bus CAN des dispositifs d'aéronef du type commun sont associés selon un nombre et une manière à un bus de communication ou à un bus CAN indépendant respectif du premier sous-système de bus ou du premier sous-système de bus CAN (22a) et sont associés selon un nombre et une manière à un bus de communication ou à un bus CAN indépendant respectif du second sous-système de bus ou du second sous-système de bus CAN (22b), tels qu'une combinaison quelconque de deux bus de communication indépendants ou de deux bus CAN du système de commande de vol puisse présenter une défaillance sans sensiblement compromettre la capacité de vol et l'aptitude à la commande de l'aéronef.

13. Aéronef selon la revendication 11 ou la revendication 12, dans lequel les dispositifs d'aéronef du type commun ou d'un premier type commun sont des volets (234) comportant des surfaces de commande d'air, dans lequel les volets sont montés d'une manière mobile sur des ailes (234) de l'aéronef, dans lequel chaque volet comporte au moins un actionneur de volet (240) et un noeud de bus ou un noeud de bus CAN (250) associé, qui est configuré pour commander un angle de déflexion du volet (234) par une commande de l'au moins un actionneur de volet (240) sur la base de messages d'instruction reçus du système d'ordinateurs de commande de vol (12).

14. Aéronef selon l'une des revendications 11 à 13, dans lequel les dispositifs d'aéronef du type commun ou d'un second type commun sont des moteurs de propulsion (232 ; 232a, 323b, 232c), dans lequel chaque moteur de propulsion comporte un noeud de bus ou un noeud de bus CAN (250) associé, qui est configuré pour commander le fonctionnement du moteur de propulsion sur la base de messages d'instruction reçus du système d'ordinateurs de commande de vol (12).

15. Aéronef selon les revendications 13 et 14, dans lequel les moteurs de propulsion (232 ; 232a, 323b, 232c) sont montés sur un volet associé (234), ou intégré à ce dernier, parmi les volets, de façon à pouvoir commander une direction de poussée des moteurs de propulsion par une commande de l'angle de déflexion du volet respectif (234) au moyen d'au moins un actionneur de volet respectif (240) et du noeud de bus ou du noeud de bus CAN (250) respectif qui lui est associé.

16. Aéronef selon la revendication 15, dans lequel plusieurs volets ou tous les volets (234) qui servent à commander une direction de poussée ne comportent individuellement qu'un seul moteur associé (232) parmi les moteurs de propulsion, qui est monté sur le volet respectif (234), ou intégré à ce dernier.

17. Aéronef selon la revendication 15 ou la revendication 16, dans lequel plusieurs volets ou tous les volets (234) qui servent à commander une direction de poussée comportent individuellement plusieurs moteurs associés (232a, 323b, 232c) parmi les moteurs de propulsion, qui sont montés sur le volet respectif (234), ou intégrés à ce dernier ;
dans lequel, de préférence, un module de propulsion (230) comprenant plusieurs moteurs de propulsion (232a, 323b, 232c) est monté sur le volet respectif (234) ou est intégré à ce dernier.

18. Aéronef selon l'une des revendications 15 à 17, dans lequel, pour chaque volet (234) comportant un moteur de propulsion (232) ou plusieurs moteurs de propulsion (232a, 323b, 232c) associés, l'au moins un actionneur de volet (240) du volet et le moteur de propulsion ou les plusieurs moteurs de propulsion associés comportent un noeud de bus ou un noeud de bus CAN (250) commun associé, qui est configuré pour commander le moteur de propulsion ou les moteurs de propulsion et l'au moins un actionneur de volet sur la base de messages d'instruction reçus du système d'ordinateurs de commande de vol (12).
